(19) Europäisches Patentamt
European Patent Office
Office européen des brevets

(11) **EP 4 286 046 A1**

(12) **EUROPÄISCHE PATENTANMELDUNG**

(43) Veröffentlichungstag:
06.12.2023 Patentblatt 2023/49

(21) Anmeldenummer: 22176020.0

(22) Anmeldetag: **30.05.2022**

(51) Internationale Patentklassifikation (IPC):
*B01J 23/62* (2006.01)     *B01J 35/00* (2006.01)
*B01J 35/10* (2006.01)     *B01J 37/00* (2006.01)
*B01J 37/02* (2006.01)     *B01J 37/03* (2006.01)
*B01J 37/04* (2006.01)     *B01J 37/08* (2006.01)

(52) Gemeinsame Patentklassifikation (CPC):
B01J 23/62; B01J 35/0013; B01J 35/002;
B01J 35/0046; B01J 35/1009; B01J 35/1014;
B01J 35/1038; B01J 35/1042; B01J 35/1047;
B01J 35/1061; B01J 37/009; B01J 37/0203;
B01J 37/0213; B01J 37/031; B01J 37/04;   (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Heraeus Deutschland GmbH & Co. KG 63450 Hanau (DE)**

(72) Erfinder:
• **Herber, Simon**
**4040 LINZ (AT)**
• **Spod, Hendrik**
**63450 Hanau (DE)**

(74) Vertreter: **Heraeus IP**
**Heraeus Business Solutions GmbH**
**Intellectual Property**
**Heraeusstraße 12-14**
**63450 Hanau (DE)**

(54) **VERFAHREN ZUR HERSTELLUNG EINES MIT EDELMETALL AUSGESTATTETEN INDIUMOXID-BASIERTEN KATALYSATORMATERIALS UND DESSEN VERWENDUNG ZUR KATALYTISCHEN HYDRIERUNG VON CO2 ZU METHANOL**

(57)    Bei der vorliegenden Erfindung handelt es sich um ein Verfahren zur Herstellung eines mit mindestens einem Edelmetall ausgestatteten Indiumoxid-basierten Katalysatormaterials, umfassend das Bereitstellen eines Indiumoxid-Vorläufermaterials, das Imprägnieren des Indiumoxid-Vorläufermaterials mit mindestens einer Edelmetallverbindung und die thermische Behandlung des imprägnierten Indiumoxid-Vorläufermaterials. Das Indiumoxid-Vorläufermaterial umfasst mindestens ein anor-ganisch-organisches Hybridmaterial, das mindestens Indium-Ionen und mindestens eine koordinativ an die Indium-Ionen gebundene, wenigstens zweizähnige organische Verbindung enthält. Außerdem betrifft die Erfindung die Verwendung eines nach diesem Verfahren hergestellten Indiumoxid-basierten Katalysatormaterials in katalytischen Reaktionen und ein Verfahren zur katalytischen Hydrierung von $CO_2$ zu Methanol.

Abbildung 4

**(Forts. nächste Seite)**

EP 4 286 046 A1

(52) Gemeinsame Patentklassifikation (CPC): (Forts.)
      **B01J 37/088**

**Beschreibung**

Die vorliegende Erfindung betrifft ein Verfahren zur Herstellung eines mit mindestens einem Edelmetall ausgestatteten Indiumoxid-basierten Katalysatormaterials, das die Bereitstellung von mindestens einem anorganisch-organischem Hybridmaterial umfasst, ein entsprechend hergestelltes Katalysatormaterial, sowie die Verwendung des Katalysatormaterials als Katalysator. Außerdem betrifft die Erfindung ein Verfahren zur katalytischen Hydrierung von $CO_2$ zu Methanol unter Verwendung des erfindungsgemäß hergestellten Indiumoxid-basierten Katalysatormaterials.

Die Bindung des klimaschädlichen $CO_2$ in verwertbare chemische Rohstoffe in s.g. CCU-Prozessen (*engl. Carbon Capture and Utilization,* zu Deutsch $CO_2$-Abscheidung und Verwertung) ist ein Ansatz, der die Reduzierung des $CO_2$-Gehalts in der Atmosphäre bei gleichzeitiger Umwandlung in eine nutzbare Kohlenstoffform verfolgt. Von besonderem Interesse ist die Umwandlung in den C1-Baustein Methanol, der sowohl als Ausgangsmaterial in chemischen Synthesen als auch als flüssiger Kraftstoff eingesetzt werden kann.

Dieser Reaktionsweg erfordert den Einsatz von Katalysatoren, die das $CO_2$ aktivieren und möglichst selektiv und effektiv die gewünschte Hydrierung des Kohlendioxids zu Methanol ermöglichen:

$$CO_2 + 3\,H_2 \rightarrow CH_3OH + H_2O.$$

Industriell werden momentan typischerweise $Cu/ZnO/Al_2O_3$-Katalysatoren verwendet. Weitere und alternative Katalysator-Systeme sind Gegenstand intensiver Forschung. So haben sich Indium-basierte Katalysatoren als vielversprechende Kandidaten herausgestellt. Die EP 3400099 A1 beschreibt beispielsweise die Verwendung von $In_2O_3$-basierten Materialien als geeignet für diesen Reaktionstyp. Weitere Verbesserungen der Katalysatoraktivität und Selektivität konnten durch das Trägern des Indiumoxids erreicht werden. In der EP 3400098 A1 werden als geeignete Trägermaterialien zum Beispiel Zirkonoxide genannt.

Ein weiterer Ansatz zur Verbesserung der Katalysatoreigenschaften ist die Dotierung des katalytisch-aktiven Indiumoxids mit weiteren katalytisch aktiven Spezies. Edelmetalle sind als geeignete Spezies für Katalyseanwendungen hinreichend bekannt, z.B. wurde von Rui et al. (Appl. Catal. B 218, 488-497, 2017) von der katalytischen Aktivität von Palladium-basierten Systemen für die Hydrierung von Kohlenstoffoxiden berichtet. Diese Katalysatoren weisen aber nicht in allen Fällen eine zufriedenstellende Aktivität und/oder Selektivität für die Hydrierung von Kohlenstoffdioxid zu Methanol auf.

In der EP 3846937 A1 wird daher eine Kombination von Indiumoxiden mit Edelmetallen als weitere metallische Komponente vorgeschlagen. Es wird sowohl von einer erhöhten Effektivität als auch einer verbesserten Selektivität der Katalysatormaterialien berichtet. Als geeignete Herstellverfahren werden die nachträgliche Ausstattung von Indiumoxid mit einem Edelmetall über Sol-Gel-Verfahren, Sprühbeschichtungen oder Imprägnierungen genannt. Als weitere Präparationsmöglichkeit wird die Co-Fällung einer Indium-Vorläuferverbindung mit einer Edelmetall-Vorläuferverbindung genannt. Als geeignete Indium-Vorläuferverbindungen kommt Indiumnitrat zum Einsatz. Allerdings werden hier keine weiteren möglichen Vorläufermaterialien genannt, die eine flexible Plattform mit einstellbaren Eigenschaften des resultierenden Katalysatormaterials zulassen.

Metallorganische Gerüstmaterialien (*engl. Metal-Organic Frameworks,* MOFs) sind eine Materialklasse, die aus anorganischen Bausteinen und organischen Bausteinen mit mindestens zwei funktionalen Gruppen als Verbindungseinheiten aufgebaut sind. Durch die dreidimensionale Vernetzung dieser Bausteine ergibt sich eine offene Gerüststruktur, die den Materialien eine hohe Porosität verleiht. Durch die variable Kombination der Baueinheiten lassen sich Materialien mit steuerbaren Eigenschaften herstellen, die sich für eine große Bandbreite von Anwendungen eignen und optimieren lassen, beispielsweise zur Gasspeicherung oder zur Katalyse.

Indium-basierte MOFs sind beispielsweise in der EP 2491047 A1 offenbart. Auch als Vorläufermaterialien für Katalysatoren wurden sie schon diskutiert, beispielsweise von Han et al. ("Environment friendly and remarkably efficient photocatalytic hydrogen evolution based on metal organic framework derived hexagonal/cubic In2O3 phase-junction" in Applied catalysis B: Environmental, 282 (2021), 119602). Allerdings wird hier kein Verfahren beschrieben, das die Dotierung der resultierenden Indiumoxide ermöglicht.

Die vorliegende Erfindung stellt eine Lösung für mindestens eines der beschriebenen Probleme zur Verfügung. Wie dargelegt, ist aus dem Stand der Technik kein Verfahren bekannt, das die einfache und flexible Herstellung von mit Edelmetall ausgestatteten Indiumoxid-Materialien mit steuerbaren Eigenschaften erlaubt, die sich beispielsweise für den Einsatz in der katalytischen Hydrierung von Methanol eignet.

Aufgabe der vorliegenden Erfindung war die Bereitstellung eines Verfahrens zur Herstellung eines mit mindestens einem Edelmetall ausgestatteten Indiumoxid-basierten Katalysatormaterials. Eine weitere Aufgabe war die Bereitstellung eines Verfahrens, das eine flexible Auswahl der Indiumoxid-Vorläufermaterialien und damit die Steuerung der resultierenden Eigenschaften des Indiumoxid-basierten Katalysatormaterials ermöglicht. Außerdem war es Aufgabe, ein Verfahren zur Herstellung eines mit Edelmetall ausgestatteten Indiumoxid-basierten Katalysatormaterials zu finden, das eine homogene Verteilung eines katalytisch aktiven Edelmetalls in und/oder auf dem Indiumoxid-basierten Katalysatormaterial erlaubt. Des Weiteren war es Teil der Aufgabe ein Verfahren bereit zu stellen, das zur Herstellung eines mit Edelmetall ausgestatteten Indiumoxid-basierten Katalysatormaterials mit hoher Stabilität, hoher Aktivität und hoher Selektivität bei der Hydrierung von $CO_2$ zu Methanol geeignet ist.

Außerdem war es Aufgabe, ein mit Edelmetall ausgestattetes Indiumoxid-basiertes Katalysatormaterial bereitzustellen, das zur Verwendung bei der Hydrierung von $CO_2$ zu Methanol geeignet ist.

Die Aufgabe wird gelöst durch ein Verfahren zur Herstellung eines mit mindestens einem Edelmetall ausgestatteten Indiumoxid-basierten Katalysatormaterials, umfassend folgende Verfahrensschritte:

(a) Bereitstellen eines Indiumoxid-Vorläufermaterials,

wobei das Indiumoxid-Vorläufermaterial mindestens ein anorganisch-organisches Hybridmaterial enthält und das anorganisch-organische Hybridmaterial mindestens Indium-Ionen und mindestens eine koordinativ an die Indium-Ionen gebundene, wenigstens zweizähnige organische Verbindung umfasst,

(b) Imprägnieren des Indiumoxid-Vorläufermaterials mit einer Zusammensetzung, wobei die Zusammensetzung

(i) mindestens ein Lösungsmittel und
(ii) mindestens eine Edelmetallverbindung umfasst,

(c) thermische Behandlung des imprägnierten Indiumoxid-Vorläufermaterials.

Es hat sich herausgestellt, dass das erfindungsgemäße Verfahren besonders geeignet ist, um homogen mit Edelmetall ausgestattete Indiumoxid-basierte Katalysatormaterialien zu erhalten. Im Rahmen der vorliegenden Erfindung wurde außerdem erkannt, dass der Einsatz eines anorganisch-organischen Hybridmaterials als Indiumoxid-Vorläufermaterial eine einfache Herstellung des entsprechenden Indiumoxid-basierten Katalysatormaterials erlaubt, da im abschließenden Kalzinierungsschritt sowohl das Indiumoxid-Vorläufermaterial als auch die Edelmetallverbindung simultan in ihre katalytisch aktive Form überführt werden können. Der Einsatz von anorganisch-organischem Hybridmaterial als Indiumoxid-Vorläufermaterial erlaubt zudem ein Herstellungsverfahren, mit dem sich die Eigenschaften des resultierenden Katalysatormaterials gezielt steuern lassen. Außerdem wurde erkannt, dass das mit Edelmetall ausgestattete Indiumoxid-basierte Katalysatormaterial eine hohe Aktivität bei gleichzeitiger Langzeitstabilität bei der Hydrierung von $CO_2$ aufweist. Mutmaßlich führt insbesondere die hohe Porosität des Vorläufermaterials zu einer Indiumoxid-Katalysatorstruktur mit hoher Porosität und einer Vielzahl von katalytisch-aktiven Defektstellen.

Die vorliegende Erfindung betrifft ein Verfahren zur Herstellung eines mit mindestens einem Edelmetall ausgestatteten Indiumoxid-basierten Katalysatormaterials.

Unter einem "Katalysatormaterial" wird hierbei ein für eine entsprechende Anwendung katalytisch aktives Material verstanden. Darunter sind zum einen ungeträgerte Katalysatormaterialien zu verstehen, also solche Materialien, die nur das Katalysatormaterial ohne einen zusätzlichen Träger umfassen. Zum anderen sind damit auch geträgerte Katalysatormaterialien umfasst, also solche, bei denen sich das Katalysatormaterial auf einem zusätzlichen Träger befindet. Typischerweise weist ein solcher Träger keine katalytische Aktivität auf.

Unter "Indiumoxid-basierten Katalysatormaterialien" sind solche Materialien zu verstehen, die mindestens eine Indiumoxid-Spezies umfassen. Bevorzugt umfasst die mindestens eine Indiumoxid-Spezies $In_2O_3$. Das Indiumoxid-basierte Katalysatormaterial kann auch weitere Komponenten und/oder Indium-Spezies enthalten.

Geeigneterweise umfasst das Indiumoxid-basierte Katalysatormaterial hauptsächlich die mindestens eine Indium-Spezies, bevorzugt zu mindestens 50 Gewichts-% (Gew.-%), bezogen auf das Gesamtgewicht des mit mindestens einem Edelmetall ausgestatteten Indiumoxid-basierten Katalysatormaterials, bevorzugt zu mindestens 60 Gew.-%, noch bevorzugter zu mindestens 70-Gew.-%, ganz besonders bevorzugt zu mindestens 80 Gew.-%, am bevorzugtesten zu mindestens 90-Gew.-%. Bevorzugterweise umfasst das Indiumoxid-basierte Katalysatormaterial die mindestens eine Indiumoxid-Spezies zu nicht mehr als 99,9 Gew.-%, bevorzugter zu nicht mehr als 95 Gew.-%, bevorzugter zu nicht mehr als 90-Gew.-%. In einer bevorzugten Ausführungsform enthält das Indiumoxid-basierte Katalysatormaterial die Indiumoxid-Spezies in einem Bereich von 50 - 99,99 Gew.-%, besonders bevorzugt in einem Bereich von 90 - 99 Gew.-%.

In einer bevorzugten Ausführungsform liegt das Indiumoxid-basierte Katalysatormaterial partikelförmig vor.

Bevorzugt beträgt die mittleren Kristallitgröße des Indiumoxid-basierte Katalysatormaterials weniger als 25 nm, bevorzugter weniger als 20 nm, noch bevorzugter weniger als 15 nm. Die mittlere Kristallitgröße wird hierbei mittels Röntgen-Pulverdiffraktometrie (XRD) wie später beschrieben bestimmt.

Bevorzugt verfügt das mit mindestens einem Edelmetall ausgestattete Indiumoxid-basierte Katalysatormaterial über eine BET-Oberfläche im Bereich von 1 bis 400 $m^2/g$, bevorzugt im Bereich von 50 bis 200 $m^2/g$. In einer bevorzugten Ausführungsform verfügt das mit mindestens einem Edelmetall ausgestattete Indiumoxid-basierte Katalysatormaterial über eine BET-Oberfläche von weniger als 400 $m^2/g$, bevorzugt weniger als 300 $m^2/g$, besonders bevorzugt weniger als 200 $m^2/g$. Bevorzugterweise verfügt das mit mindestens einem Edelmetall ausgestattete Indiumoxid-basierte Katalysatormaterial über eine BET-Oberfläche von mehr als 1 $m^2/g$, bevorzugt mehr als 10 $m^2/g$, besonders bevorzugt mehr

als 50 m$^2$/g. Die BET-Oberfläche wird auch spezifische Oberfläche genannt und kann nach ISO 9277:2010 mit Stickstoff als Adsorbat bestimmt werden.

Unter "mit mindestens einem Edelmetall ausgestattet" ist zu verstehen, dass mindestens ein Edelmetall auf, in oder an dem Indiumoxid-basierten Katalysatormaterial vorliegt, beispielsweise in Form von Partikeln oder einer Schicht, wobei diese Schicht bevorzugt nicht-geschlossen vorliegt. Die Ausstattung des Indiumoxid-basierten Katalysatormaterials kann dabei sowohl auf der Oberfläche als auch im Inneren des Indiumoxid-basierten Katalysatormaterials vorliegen. Der Begriff "Oberfläche" umfasst hierbei sowohl die äußere als auch die innere Oberfläche, mit anderen Worten ist auch die innenliegende durch Poren gebildete Oberfläche umfasst.

Das Indiumoxid-basierte Katalysatormaterial wird mit mindestens einem Edelmetall ausgestattet, das im Folgenden auch als "Edelmetallspezies" bezeichnet wird. Unter der Bezeichnung "Edelmetallspezies" sind sowohl einzelne Edelmetalle als auch deren Kombinationen zu verstehen. Die Edelmetallspezies bildet gemeinsam mit der mindestens einen Indiumoxid-Spezies die katalytisch aktiven Zentren des Katalysatormaterials.

Die verwendeten Bezeichnungen "Edelmetall" oder "Edelmetallspezies" beinhalten hierbei keine Aussage über die Oxidationsstufe des Edelmetalls oder der Edelmetalle. Mit anderen Worten wird damit nicht das Vorliegen des elementaren Zustands mit der Oxidationsstufe 0 bezeichnet. Die Edelmetallspezies kann im Indiumoxid-basierten Katalysatormaterial elementar, also in der Oxidationsstufe (0) oder in einer höheren Oxidationsstufe vorliegen. Der hierin verwendete dem Fachmann bekannte Begriff "Oxidationsstufe" bedeutet die formale Ladung eines Atoms innerhalb einer Verbindung bzw. die tatsächliche Ladung einatomiger Ionen. Atome im elementaren Zustand weisen per Definition die Oxidationsstufe 0 auf.

Das mindestens eine Edelmetall ist bevorzugt ausgewählt aus der Gruppe bestehend aus Edelmetallen der 8. Gruppe, der 9. Gruppe, der 10. Gruppe und der 11. Gruppe des Periodensystems. Besonders bevorzugt ist das mindestens eine Edelmetall ausgewählt aus der Gruppe bestehend aus Ruthenium (Ru), Rhodium (Rh), Palladium (Pd), Silber (Ag), Platin (Pt), Silber (Ag), Gold (Au), Iridium (Ir) und deren Kombinationen. Platin (Pt), Palladium (Pd), Rhodium (Rh) und Iridium (Ir) sind dabei besonders bevorzugt, noch bevorzugter sind Platin (Pt) und Palladium (Pd), am bevorzugtesten handelt es sich bei dem mindestens einen Edelmetall um Palladium (Pd). Das mindestens eine Edelmetall kann auch eine Kombination mehrerer Edelmetalle umfassen.

In einer bevorzugten Ausführungsform handelt es sich bei dem mindestens einen Edelmetall um Palladium, Palladium und Ruthenium, Palladium und Rhodium, Palladium und Silber, Palladium und Osmium, Palladium und Platin, Palladium und Gold, Palladium und Iridium, Platin, Platin und Ruthenium, Platin und Rhodium, Platin und Osmium, Platin und Gold, Platin und Iridium, Ruthenium, Ruthenium und Rhodium, Ruthenium und Osmium, Ruthenium und Gold oder Ruthenium und Iridium. Ganz besonders handelt es sich bei dem mindestens einen Edelmetall Palladium, Palladium und Ruthenium, Palladium und Rhodium, Palladium und Osmium, Palladium und Platin, Palladium und Gold oder Palladium und Iridium.

Bevorzugt enthält das mit mindestens einem Edelmetall ausgestattete Indiumoxid-basierte Katalysatormaterial nicht mehr als 50 Gew.-% der Edelmetall-Spezies, bezogen auf das Gesamtgewicht der mindestens einen Indiumoxid-Spezies und der Edelmetall-Spezies, besonders bevorzugt nicht mehr als 30 Gew.-%, insbesondere nicht mehr als 10 Gew.-%.

In einer bevorzugten Ausführungsform enthält das mit mindestens einem Edelmetall ausgestattete Indiumoxid-basierte Katalysatormaterial die Edelmetall-Spezies in einem Bereich von 0,01 - 50 Gew.-%, beispielsweise 50 Gew.-% Edelmetall-Spezies, 40 Gew.-% Edelmetall-Spezies, 30 Gew.-% Edelmetall-Spezies, 20 Gew.-% Edelmetall-Spezies, 15 Gew.-% Edelmetall-Spezies, 10 Gew.-% Edelmetall-Spezies, 9 Gew.-% Edelmetall-Spezies, 8 Gew.-% Edelmetall-Spezies, 7 Gew.-% Edelmetall-Spezies, 6 Gew.-% Edelmetall-Spezies, 5 Gew.-% Edelmetall-Spezies, 4 Gew.-% Edelmetall-Spezies, 3 Gew.-% Edelmetall-Spezies, 2 Gew.-% Edelmetall-Spezies, 1 Gew.-% Edelmetall-Spezies, 0,5 Gew.-% Edelmetall-Spezies, 0,1 Gew.- % Edelmetall-Spezies, 0,01 Gew.-% Edelmetall-Spezies oder Zwischenstufen davon.

Das Indiumoxid-basierte Katalysatormaterial kann Palladium in einem Gewichtsanteil von 0,01 - 50 Gew.-% enthalten, beispielsweise 50 Gew.-% Palladium, 40 Gew.-% Palladium, 30 Gew.-% Palladium, 20 Gew.-% Palladium, 15 Gew.-% Palladium, 10 Gew.-% Palladium, 9 Gew.-% Palladium, 8 Gew.-% Palladium, 7 Gew.-% Palladium, 6 Gew.-% Palladium, 5 Gew.- % Palladium, 4 Gew.-% Palladium, 3 Gew.-% Palladium, 2 Gew.-% Palladium, 1 Gew.-% Palladium, 0,5 Gew.-% Palladium, 0,1 Gew.-% Palladium, 0,01 Gew.-% Palladium oder Zwischenstufen davon. Darunter ist zu verstehen, dass 0,01 - 50 % des Gesamtgewichts des Indiumoxid-basierten Katalysatormaterials, enthaltend die mindestens eine Indiumoxid-Spezies und das mindestens eine Edelmetall, aus einer Palladium-Spezies bestehen. In einer bevorzugten Ausführungsform enthält das Indiumoxid-basierte Katalysatormaterial die Palladium-Spezies in einem Gewichtsanteil von 0,01 - 30 Gew.-%, noch bevorzugter 0,1 - 10 Gew.-%. Unter der Bezeichnung "Palladium-Spezies" ist analog zur Verwendung des Begriffs "Edelmetall-Spezies" keine Spezifizierung der Oxidationsstufe zu verstehen.

Das Indiumoxid-basierte Katalysatormaterial kann Platin in einem Gewichtsanteil von 0,01 - 50 Gew.-% enthalten, beispielsweise 50 Gew.-% Platin, 40 Gew.-% Platin, 30 Gew.-% Platin, 20 Gew.-% Platin, 15 Gew.-% Platin, 10 Gew.-% Platin, 9 Gew.-% Platin, 8 Gew.-% Platin, 7 Gew.-% Platin, 6 Gew.-% Platin, 5 Gew.-% Platin, 4 Gew.-% Platin, 3 Gew.-% Platin, 2 Gew.- % Platin, 1 Gew.-% Platin, 0,5 Gew.-% Platin, 0,1 Gew.-% Platin, 0,01 Gew.-% Platin oder Zwischenstufen davon. Darunter ist zu verstehen, dass 0,01 - 50 % des Gesamtgewichts des Indiumoxid-basierten Katalysatormaterials, enthaltend die mindestens eine Indiumoxid-Spezies und das mindestens eine Edelmetall, aus einer Platin-Spezies bestehen. In einer bevorzugten Ausführungsform enthält das Indiumoxid-basierte Katalysatormaterial die Platin-Spezies in einem Gewichtsanteil von 0,01 - 30 Gew.-%, noch bevorzugter 0,1 - 10 Gew.-%. Unter der Bezeichnung "Platin-Spezies" ist analog zur Verwendung des Begriffs "Edelmetall-Spezies" keine Spezifizierung der Oxidationsstufe zu verstehen.

Im Rahmen der vorliegenden Erfindungen werden unter Mikroporen Poren mit einer Porengröße im Bereich von weniger als 2 nm verstanden, unter Mesoporen Poren mit einer Porengröße im Bereich von 2 bis 50 nm und unter Makroporen Poren mit einer Porengröße im Bereich von 50 nm bis 5 $\mu$m. Unter der Porengröße wird hierbei die durchschnittliche Größe der Poren verstanden. Dementsprechend wird unter Porenvolumen die Summe der Volumina solcher Poren verstanden. Das Porenvolumen und die Porendurchmesserverteilung kann gemäß BJH nach DIN 66134:1998-02 bestimmt werden.

Das erfindungsgemäß erhaltene mit mindestens einem Edelmetall ausgestattete Indiumoxid-basierte Katalysatormaterial verfügt bevorzugt über Poren im Größenbereich von Mesoporen.

Bevorzugterweise ist die mittlere Porengröße des mit mindestens einem Edelmetall ausgestattete Indiumoxid-basierte Katalysatormaterial kleiner als 50 nm, bevorzugter kleiner als 40 nm, noch bevorzugter kleiner als 30 nm. Es kann bevorzugt sein, dass die mittlere Porengröße des mit mindestens einem Edelmetall ausgestattete Indiumoxid-basierte Katalysatormaterial größer als 2 nm ist, bevorzugter größer als 3 nm, noch bevorzugter größer als 5 nm. In bevorzugten Ausführungsformen liegt die mittlerer Porengröße des mit mindestens einem Edelmetall ausgestatteten Indiumoxid-basierten Katalysatormaterials im Bereich von 2 bis 50 nm, bevorzugter im Bereich von 5 bis 30 nm.

Bevorzugterweise ist das Porenvolumen des mit mindestens einem Edelmetall ausgestatteten Indiumoxid-basierten Katalysatormaterials kleiner als 5 cm$^3$/g, bevorzugter kleiner als 3 cm$^3$/g, noch bevorzugter kleiner als 1 cm$^3$/g. Es kann bevorzugt sein, dass das Porenvolumen des mit mindestens einem Edelmetall ausgestatteten Indiumoxid-basierten Katalysatormaterials größer als 0,05 cm$^3$/g ist, bevorzugter größer als 0,1 cm$^3$/g, noch bevorzugter größer als 0,15 cm$^3$/g. In bevorzugten Ausführungsformen liegt das Porenvolumen des mit mindestens einem Edelmetall ausgestatteten Indiumoxid-basierten Katalysatormaterials im Bereich von 0,05 bis 5 cm$^3$/g, bevorzugter im Bereich von 0,1 bis 3 cm$^3$/g.

In Verfahrensschritt (a) wird ein Indiumoxid-Vorläufermaterial bereitgestellt. Unter einem Indiumoxid-Vorläufermaterial ist in diesem Zusammenhang ein Material zu verstehen, dass bei der thermischen Behandlung in Schritt (c) in zumindest teilweise in mindestens eine Indiumoxid-Spezies umgesetzt wird, bevorzugt in In$_2$O$_3$.

Das Indiumoxid-Vorläufermaterial umfasst mindestens ein anorganisch-organisches Hybridmaterial. Solche anorganisch-organischen Hybridmaterialien werden auch als metallorganische Gerüststrukturen oder MOFs (engl. metal-organic frameworks) bezeichnet. Anorganisch-organische Hybridmaterialien umfassen mindestens zwei Komponenten. Die anorganische Komponente umfasst Metallionen, typischerweise Kationen. Die organische Komponente umfasst mindestens eine mit diesen Metallionen koordinativ verbundene wenigstens zweizähnige organische Verbindung.

Ein Vorteil beim Einsatz von metallorganischen Gerüststrukturen als Indiumoxid-Vorläufermaterialien ist die hohe Flexibilität der Struktur dieser Materialklasse. Durch die Wahl der organischen Komponente kann beispielsweise gezielt die Porosität des Vorläufermaterials beeinflusst werden, was sich wiederum auf die Eigenschaften der mindestens einen Indiumoxid-Spezies des Indiumoxid-basierten Katalysatormaterials auswirken kann.

Das Indiumoxid-Vorläufermaterial umfasst das mindestens eine anorganisch-organische Hybridmaterial bevorzugt zu mindestens 50 Gew.-% bezogen auf das Gesamtgewicht des Indiumoxid-Vorläufermaterials, bevorzugter zu mindestens 70 Gew.-%, noch bevorzugter zu mindestens 90 Gew.-%. Insbesondere bevorzugt besteht das Indiumoxid-Vorläufermaterial vollständig aus dem anorganisch-organischen Hybridmaterial.

Das anorganisch-organische Hybridmaterial im Fall der vorliegenden Erfindung umfasst als Metallionen mindestens Indium-Ionen, bevorzugt handelt es sich bei den Indium-Ionen um In$^{3+}$-Ionen. Das anorganisch-organisches Hybridmaterial kann auch weitere Metallionen umfassen.

Das anorganisch-organische Hybridmaterial umfasst außerdem mindestens eine wenigstens zweizähnige organische Verbindung. Diese organische Verbindung wird auch als Ligand bezeichnet. Unter "zweizähnig", auch "bidentat", ist eine organische Komponente zu verstehen, die wenigstens zwei funktionelle Gruppen aufweist, die mit Metallionen eine koordinative Bindung aufbauen können. Als wenigstens zweizähnige organische Verbindungen kommen prinzipiell alle zur Koordination mit den Indium-Ionen geeigneten organischen Verbindungen in Frage, die weitere Struktur der organischen Verbindung ist nicht weiter beschränkt. Die organische Verbindung kann beispielsweise neben den mindestens zwei funktionellen Gruppen eine Alkylstruktur mit 1 bis 10 Kohlenstoffatomen, eine Arylstruktur mit 1 bis 5 Phenylringen oder eine Arylstruktur mit 1 bis 5 Pyridylringen aufweisen.

Bevorzugt ist die mindestens eine, wenigstens zweizähnige organische Verbindung eine Di-Carbonsäure, eine Tri-Carbonsäure, eine Tetra-Carbonsäure oder ein Pyridin-Derivat. Insbesondere kann die wenigstens zweizähnige organische Verbindung ausgewählt werden aus: substituierten oder unsubstituierten, ein- oder mehrkernigen aromatischen Di-, Tri- oder Tetra-Carbonsäuren und substituierten oder unsubstituierten, ein- oder mehrkernigen aromatischen, mindestens ein Heteroatom aufweisenden aromatischen Di-, Tri- oder Tetra-Carbonsäuren.

Bevorzugt verfügt die mindestens zweizähnige organische Verbindung über mindestens zwei Carbonsäuregruppen und eine weitere zur Koordinierung mit der Edelmetallspezies geeignete funktionelle Gruppe. Im Einzelnen sind beispielhaft zu nennen substituierte oder unsubstituierte Di- oder Tri-Carbonsäuren des Benzols, Naphthalins, Pyridins oder Chinolins. Bevorzugt weist die weitere zur Koordinierung mit der Edelmetallspezies geeignete funktionelle Gruppe mindestens ein Heteroatom auf, bevorzugt Stickstoff. Besonders bevorzugte wenigstens zweizähnige organische Verbindung sind 2-Amino-Terephtalsäure und 2,2'-Bipyridyl-5,5'-Dicarbonsäure.

Besonders bevorzugt umfasst das anorganisch-organisches Hybridmaterial $In^{3+}$-Ionen und 2-Amino-Terephtalsäure.

Geeignete anorganisch-organische Hybridmaterialien können über Verfahren hergestellt werden, bei denen Reaktionsmischungen umgesetzt werden, die einen in einem Lösungsmittel gelösten oder suspendierten Indium-Ionen-Vorläufer und eine geeignete, wenigstens zweizähnige organische Verbindung umfassen.

Als Indium-Ionen-Vorläufer kommen prinzipiell Indium-Verbindungen in Frage, die in den entsprechenden Lösungsmitteln löslich sind. Bevorzugt ist der Indium-Ionen-Vorläufer ein In(III)-Salz, bevorzugt ausgewählt aus der Gruppe bestehend aus Indium-Sulfamat, Indium-Chlorid, Indium-Bromid, Indium-Iodid, Indium-Carbonat, Indium-Acetat, Indium-Format, Indium-Acetylacetonat, Indium-Nitrat ($In(NO_3)_3$) und Mischungen dieser Verbindungen. Besonders bevorzugt ist der Indium-Ionen-Vorläufer Indium-Nitrat oder ein Hydrat von Indium-Nitrat.

Die Reaktionsmischung umfasst ein geeignetes Lösungsmittel. Ein "Lösungsmittel" bedeutet hierin, dass das Lösungsmittel mindestens eine flüssige Substanz umfasst, in welcher der Indium-Ionen-Vorläufer löslich ist. Das Lösungsmittel kann mehrere chemische Substanzen enthalten, d. h. das Lösungsmittel kann auch ein Lösungsmittelgemisch sein.

Das Lösungsmittel umfasst bevorzugt mindestens ein organisches Lösungsmittel oder eine Mischung mehrerer organischer Lösungsmittel, beispielsweise ein cyclisches oder acyclisches Amid, einen cyclischen oder acyclischen Ester, einen cyclischen oder acyclischen Ether, einen cyclischen oder acyclischen Alkohol oder ein cyclisches oder acyclisches Nitril. Bevorzugt ist das mindestens eine organische Lösungsmittel ausgewählt aus der Gruppe bestehend aus Dimethylformamid (DMF), Dimethylacetamid (DMAC), N-Methylpyrrolidon, Dimethylsulfoxid (DMSO), Tetrahydrofuran (THF), Methanol, Ethanol, Acetonitril und deren Mischungen.

In einer bevorzugten Ausführungsform umfasst die Reaktionsmischung das Lösungsmittel zu 50 bis 95 Gew.-% (Gewichts-%), bezogen auf das Gesamtgewicht von Lösungsmittel, dem Indium-Ionen-Vorläufer und der mindestens zweizähnigen organischen Verbindung.

Bevorzugt liegt das molare Verhältnisse des Indium-Ionen-Vorläufers und der geeigneten wenigstens zweizähnigen organischen Verbindung in der Reaktionsmischung im Bereich von 1 - 1 bis 5 - 1, bevorzugter im Bereich von 1 - 1 bis 3 - 1.

Geeignete Verfahren zur Herstellung von anorganisch-organischen Hybridmaterialien können außerdem die Umsetzung des Indium-Ionen-Vorläufers und der geeigneten wenigstens zweizähnigen organischen Verbindung in Gegenwart einer Base umfassen.

Die Base kann bevorzugt ein cyclisches oder acyclisches sekundäres Amin, ein cyclisches oder acyclisches tertiäres Amin, ein cyclisches oder acyclisches quartäres Ammoniumhydroxid, ein Pyridin, ein cyclisches oder acyclisches Amidin, ein Guanidin, ein Carbonat oder ein Acetat sein. Bevorzugt ist die Base ausgewählt aus der Gruppe bestehend aus Triethylamin, Dimethylamin, Pyridin, 1,1,3,3-Tetramethylguanidin (TMG), 1,4-Diazabicyclo[2.2.2]octan (DABCO), 1,8-Diazabicyclo[5.4.0]undec-7-en (DBU), Tetramethylammonium-Hydroxid, Tetrabutylammonium-Hydroxid, Natrium-Carbonat, Natrium-Acetat und Ammoniak.

Bevorzugt liegen die mindestens zweizähnige organische Verbindung und die Base in einem molaren Verhältnis im Bereich von 1 - 2 bis 1 - 10 vor, vorzugsweise im Bereich von 1 - 2 bis 1 - 5.

Verfahren zur Herstellung von anorganisch-organischen Hybridmaterialien können bei Raumtemperatur durchgeführt werden. Geeignete Verfahren können jedoch ebenso bei einer gegenüber Raumtemperatur verringerten oder erhöhten Temperatur durchgeführt werden.

Verfahren zur Herstellung von anorganisch-organischen Hybridmaterialien können unter Normaldruck durchgeführt werden. Geeignete Verfahren können jedoch ebenso bei erhöhtem Druck durchgeführt werden, beispielsweise in einem geschlossenen Autoklaven.

Als weitere Schritte können geeignete Verfahren zur Herstellung des anorganisch-organischen Hybridmaterials das Waschen, das Abfiltrieren, und/oder das Trocknen des hergestellten anorganisch-organischen Hybridmaterials umfassen. Ein Abtrennen und optionales Reinigen können mit dem Fachmann bekannten Verfahren erfolgen, beispielsweise durch Zentrifugieren, Extrahieren, Filtrieren, Dekantieren oder Abdestillieren des Lösungsmittels, optional im Vakuum.

Das Trocknen des anorganisch-organischen Hybridmaterials erfolgt beispielsweise bei einer Temperatur unterhalb von 250 °C, bevorzugter unterhalb von 200 °C, noch bevorzugter unterhalb von 150 °C. Das Trocknen erfolgt bevorzugt bei einer Temperatur zwischen 40 und 200 °C, bevorzugter zwischen 60 und 150 °C.

Insbesondere kann das Trocknen unter vermindertem Druck erfolgen, bevorzugt bei einem Druck von unter 1 bar, bevorzugter unter 500 mbar, insbesondere bevorzugt unter 300 mbar.

Bevorzugt erfolgt das Trocknen für einen Zeitraum von 1 h bis 48 h, bevorzugt für einen Zeitraum von 2 h bis 30 h, noch bevorzugter für einen Zeitraum von 3 h bis 24 h.

Bevorzugt erfolgt das Trocknen durch überkritisches Trocknen mit $CO_2$ oder unter Ausschluss von Sauerstoff, beispielsweise unter Vakuum oder unter Inertgas. Bevorzugt beträgt der $CO_2$ Druck beim überkritischen Trocknen mit $CO_2$ 100 - 300 bar, besonders bevorzugt 150 - 250 bar.

Geeignete anorganisch-organische Hybridmaterialien können hergestellt werden über Verfahren umfassend die Schritte

> i) Bereitstellung einer Lösung oder Suspension II umfassend ein Lösungsmittel A, einen Indium-Ionen-Vorläufer und eine wenigstens zweizähnige organische Verbindung,
> ii) Zugabe einer Base, optional gelöst in einem Lösungsmittel C, zu der Lösung oder Suspension II aus Schritt i).

Optional kann das Verfahren einen weiteren Schritt umfassen, in dem die wenigstens zweizähnige organische Verbindung zu einer Lösung oder Suspension, umfassend ein Lösungsmittel A und einen Indium-Ionen-Vorläufer zugegeben wird. Ein solches Verfahren umfasst die Schritte

> i) Bereitstellung einer Lösung oder Suspension I umfassend ein Lösungsmittel A und einen Indium-Ionen-Vorläufer,
> ii) Zugabe einer wenigstens zweizähnigen organischen Verbindung, optional gelöst in einem Lösungsmittel B, zu der Lösung oder Suspension I aus Schritt i) unter Erhalt einer Lösung oder Suspension II,
> iii) Zugabe einer Base, optional gelöst in einem Lösungsmittel C, zu der Lösung oder Suspension II aus Schritt ii).

Das Lösungsmittel A aus Schritt i) umfasst bevorzugt mindestens ein organisches Lösungsmittel oder eine Mischung mehrerer organischer Lösungsmittel, beispielsweise ein cyclisches oder acyclisches Amid, einen cyclischen oder acyclischen Ester, einen cyclischen oder acyclischen Ether oder einen cyclischen oder acyclischen Alkohol oder ein cyclisches oder acyclisches Nitril. Bevorzugt ist das Lösungsmittel ausgewählt aus der Gruppe bestehend aus Dimethylformamid (DMF), Dimethylacetamid (DMAC), N-Methylpyrrolidon, Dimethylsulfoxid (DMSO), Tetrahydrofuran (THF), Methanol, Ethanol und Acetonitril.

Das optionale Lösungsmittel B umfasst bevorzugt mindestens ein organisches Lösungsmittel oder eine Mischung mehrerer organischer Lösungsmittel, beispielsweise ein cyclisches oder acyclisches Amid, einen cyclischen oder acyclischen Ester, einen cyclischen oder acyclischen Ether oder einen cyclischen oder acyclischen Alkohol oder ein cyclisches oder acyclisches Nitril. Bevorzugt ist das Lösungsmittel ausgewählt aus der Gruppe bestehend aus Dimethylformamid (DMF), Dimethylacetamid (DMAC), N-Methylpyrrolidon, Dimethylsulfoxid (DMSO), Tetrahydrofuran (THF), Methanol, Ethanol und Acetonitril.

Das optionale Lösungsmittel C umfasst bevorzugt mindestens ein organisches Lösungsmittel oder eine Mischung mehrerer organischer Lösungsmittel, beispielsweise ein cyclisches oder acyclisches Amid, einen cyclischen oder acyclischen Ester, einen cyclischen oder acyclischen Ether oder einen cyclischen oder acyclischen Alkohol oder ein cyclisches oder acyclisches Nitril. Bevorzugt ist das Lösungsmittel ausgewählt aus der Gruppe bestehend aus Dimethylformamid (DMF), Dimethylacetamid (DMAC), N-Methylpyrrolidon, Dimethylsulfoxid (DMSO), Tetrahydrofuran (THF), Methanol, Ethanol und Acetonitril.

Lösungsmittel A, Lösungsmittel B und Lösungsmittel C können das gleiche oder unterschiedliche Lösungsmittel oder Lösungsmittelgemische sein, bevorzugt handelt es sich bei den Lösungsmitteln A, B und C um das gleiche Lösungsmittel bzw. Lösungsmittelgemisch.

Geeignete wenigstens zweizähnige organische Verbindungen sind beispielsweise DiCarbonsäuren, Tri-Carbonsäuren, Tetra-Carbonsäuren oder Pyridin-Derivate. Insbesondere kann die wenigstens zweizähnige Verbindung ausgewählt werden aus: substituierten oder unsubstituierten, ein- oder mehrkernigen aromatischen Di-, Tri- oder Tetra-Carbonsäuren und substituierten oder unsubstituierten, ein- oder mehrkernigen aromatischen, mindestens ein Heteroatom aufweisenden aromatischen Di-, Tri- oder Tetra-Carbonsäuren. Bevorzugt verfügt die mindestens zweizähnige organische Verbindung über mindestens zwei Carbonsäuregruppen und eine weitere zur Koordinierung mit der Edelmetallspezies geeignete funktionelle Gruppe. Im Einzelnen sind beispielhaft zu nennen substituierte oder unsubstituierte Di- oder Tri-carbonsäuren des Benzols, Naphthalins, Pyridins oder Chinolins. Bevorzugt weist die weitere zur Koordinierung mit der Edelmetallspezies geeignete funktionelle Gruppe mindestens ein Heteroatom auf, bevorzugt Stickstoff. Besonders bevorzugte wenigstens zweizähnige organische Verbindung sind 2-Amino-Terephtalsäure und 2,2'-Bipyridyl-5,5'-Dicarbonsäure.

Die eingesetzte Base kann bevorzugt ein cyclisches oder acyclisches sekundäres Amin, ein cyclisches oder acyclisches tertiäres Amin, ein cyclisches oder acyclisches quartäres Ammoniumhydroxid, ein Pyridin, ein cyclisches oder acyclisches Amidin, ein Guanidin, ein Carbonat oder ein Acetat sein. Bevorzugt ist die Base ausgewählt aus der Gruppe enthaltend Triethylamin, Dimethylamin, Pyridin, 1,1,3,3-Tetramethylguanidin (TMG), 1,4-Diazabicyclo[2.2.2]octan (DABCO), 1,8-Diazabicyclo[5.4.0]undec-7-en (DBU), Tetramethylammonium-Hydroxid, Tetrabutylammonium-Hydroxid, Natrium-Carbonat, Natrium-Acetat und Ammoniak.

Bevorzugt wird die Zugabe der Base bei einer Temperatur im Bereich von 0 bis 120 °C durchgeführt, besonders bevorzugt in einem Bereich von 20 bis 100 °C. Die Dauer des Schritts liegt bevorzugt in einem Bereich von 0,5 bis 6 h, besonders bevorzugt in einem Bereich von 1 bis 5 h. Bevorzugt wird die Reaktionsmischung während der Zugabe der Base gerührt.

Typischerweise fällt nach Zugabe der Base ein Feststoff aus. Das Abtrennen und optional Reinigen des ausgefallenen Feststoffs kann mit dem Fachmann bekannten Verfahren erfolgen, beispielsweise durch Zentrifugieren, Extrahieren, Filtrieren, Dekantieren oder Abdestillieren des Lösungsmittels, optional im Vakuum.

Bevorzugt kann das anorganisch-organische Hybridmaterial hergestellt werden über Verfahren umfassend die Schritte

> i) Bereitstellung einer Lösung umfassend Indium-Nitrat in DMF;
> ii) Zugabe von 2-Aminoterepthalsäure, optional gelöst in DMF, zu der Lösung aus Schritt i),
> iii) Zugabe einer in DMF gelösten Base zu der Lösung aus Schritt ii), wobei ein Feststoff ausfällt,
> iv) Waschen mit DMF und Filtrieren des Feststoffs erhalten in Schritt iii),
> v) Trocknen des Feststoffs erhalten in Schritt iv).

Alternativ können geeignete anorganisch-organische Hybridmaterialien auch hergestellt werden über Verfahren umfassend die Schritte

> i) Bereitstellung einer Lösung oder Suspension I umfassend ein Lösungsmittel A, eine wenigstens zweizähnige organische Verbindung und eine Base,
> ii) Zugabe der Lösung oder Suspension I aus Schritt i) zu eines Indium-Ionen-Vorläufer, optional als Lösung oder Suspension in einem Lösungsmittel B.

Das Lösungsmittel A aus Schritt i) umfasst bevorzugt mindestens ein organisches Lösungsmittel oder eine Mischung mehrerer organischer Lösungsmittel, beispielsweise ein cyclisches oder acyclisches Amid, einen cyclischen oder acyclischen Ester, einen cyclischen oder acyclischen Ether oder einen cyclischen oder acyclischen Alkohol oder ein cyclisches oder acyclisches Nitril. Bevorzugt ist das Lösungsmittel ausgewählt aus der Gruppe bestehend aus Dimethylformamid (DMF), Dimethylacetamid (DMAC), N-Methylpyrrolidon, Dimethylsulfoxid (DMSO), Tetrahydrofuran (THF), Methanol, Ethanol und Acetonitril.

Das optionale Lösungsmittel B umfasst bevorzugt mindestens ein organisches Lösungsmittel oder eine Mischung mehrerer organischer Lösungsmittel, beispielsweise ein cyclisches oder acyclisches Amid, einen cyclischen oder acyclischen Ester, einen cyclischen oder acyclischen Ether oder einen cyclischen oder acyclischen Alkohol oder ein cyclisches oder acyclisches Nitril. Bevorzugt ist das Lösungsmittel ausgewählt aus der Gruppe bestehend aus Dimethylformamid (DMF), Dimethylacetamid (DMAC), N-Methylpyrrolidon, Dimethylsulfoxid (DMSO), Tetrahydrofuran (THF), Methanol, Ethanol und Acetonitril.

Lösungsmittel A und Lösungsmittel B können das gleiche oder unterschiedliche Lösungsmittel oder Lösungsmittelgemische sein, bevorzugt handelt es sich bei den Lösungsmitteln A und B um das gleiche Lösungsmittel bzw. Lösungsmittelgemisch.

Geeignete wenigstens zweizähnige organische Verbindungen sind beispielsweise DiCarbonsäuren, Tri-Carbonsäuren, Tetra-Carbonsäuren oder Pyridin-Derivate. Insbesondere kann die wenigstens zweizähnige Verbindung ausgewählt werden aus: substituierten oder unsubstituierten, ein- oder mehrkernigen aromatischen Di-, Tri- oder Tetra-Carbonsäuren und substituierten oder unsubstituierten, ein- oder mehrkernigen aromatischen, mindestens ein Heteroatom aufweisenden aromatischen Di-, Tri- oder Tetra-Carbonsäuren. Bevorzugt verfügt die mindestens zweizähnige organische Verbindung über mindestens zwei Carbonsäuregruppen und eine weitere zur Koordinierung mit der Edelmetallspezies geeignete funktionelle Gruppe. Im Einzelnen sind beispielhaft zu nennen substituierte oder unsubstituierte Di- oder Tri-carbonsäuren des Benzols, Naphthalins, Pyridins oder Chinolins. Bevorzugt weist die weitere zur Koordinierung mit der Edelmetallspezies geeignete funktionelle Gruppe mindestens ein Heteroatom auf, bevorzugt Stickstoff. Besonders bevorzugte wenigstens zweizähnige organische Verbindung sind 2-Amino-Terephtalsäure und 2,2'-Bipyridyl-5,5'-Dicarbonsäure.

Die eingesetzte Base kann bevorzugt ein cyclisches oder acyclisches sekundäres Amin, ein cyclisches oder acyclisches tertiäres Amin, ein cyclisches oder acyclisches quartäres Ammoniumhydroxid, ein Pyridin, ein cyclisches oder acyclisches Amidin, ein Guanidin, ein Carbonat oder ein Acetat sein. Bevorzugt ist die Base ausgewählt aus der Gruppe enthaltend Triethylamin, Dimethylamin, Pyridin, 1,1,3,3-Tetramethylguanidin (TMG), 1,4-Diazabicyclo[2.2.2]octan (DABCO), 1,8-Diazabicyclo[5.4.0]undec-7-en (DBU), Tetramethylammonium-Hydroxid, Tetrabutylammonium-Hydroxid, Natrium-Carbonat, Natrium-Acetat und Ammoniak.

Bevorzugt wird die Zugabe der Base bei einer Temperatur im Bereich von 0 bis 120 °C durchgeführt, besonders bevorzugt in einem Bereich von 20 bis 100 °C. Die Dauer des Schritts liegt bevorzugt in einem Bereich von 0,5 bis 6 h, besonders bevorzugt in einem Bereich von 1 bis 5 h. Bevorzugt wird die Reaktionsmischung während der Zugabe der Base gerührt.

Typischerweise fällt nach Zugabe des Indium-Ionen-Vorläufers ein Feststoff aus. Das Abtrennen und optional Reinigen des ausgefallenen Feststoffs kann mit dem Fachmann bekannten Verfahren erfolgen, beispielsweise durch Zentrifugieren, Extrahieren, Filtrieren, Dekantieren oder Abdestillieren des Lösungsmittels, optional im Vakuum.

Bevorzugt kann das anorganisch-organische Hybridmaterial hergestellt werden über Verfahren umfassend die Schritte

> i) Bereitstellung einer Lösung umfassend 2-Aminoterephtalsäure und eine Base in DMF;
> ii) Zugabe von Indium-Nitrat, optional gelöst in DMF, zu der Lösung aus Schritt i), wobei ein Feststoff ausfällt,
> iii) Waschen mit DMF und Filtrieren des Feststoffs erhalten in Schritt ii),
> iv) Trocknen des Feststoffs erhalten in Schritt iii).

Geeignete anorganisch-organisches Hybridmaterialien können auch über Verfahren hergestellt werden, die keine Zugabe einer Base erfordern. Solche Verfahren umfassen bevorzugt folgende Schritte:

> i) Bereitstellung einer Lösung oder Suspension I umfassend ein Lösungsmittel A und einen In-Ionen-Vorläufer,
> ii) Zugabe einer wenigstens zweizähnigen organischen Verbindung, optional gelöst in einem Lösungsmittel B, zu der Lösung oder Suspension I aus Schritt i) unter Erhalt einer Lösung oder Suspension II,
> iii) Erhitzen der Lösung oder Suspension II aus Schritt ii).

Optional kann das Verfahren auch weitere Schritte umfassen, beispielsweise

> iv) Waschen und Filtrieren eines Feststoffs erhalten in Schritt iii),
> v) Trocknen eines Feststoffs erhalten in Schritt iii) oder optional Schritt iv).

Das Lösungsmittel A aus Schritt i) umfasst bevorzugt mindestens ein organisches Lösungsmittel oder eine Mischung mehrerer organischer Lösungsmittel, beispielsweise ein cyclisches oder acyclisches Amid, einen cyclischen oder acyclischen Ester, einen cyclischen oder acyclischen Ether oder einen cyclischen oder acyclischen Alkohol oder ein cyclisches oder acyclisches Nitril. Bevorzugt ist das Lösungsmittel ausgewählt aus der Gruppe bestehend aus Dimethylformamid (DMF), Dimethylacetamid (DMAC), N-Methylpyrrolidon, Dimethylsulfoxid (DMSO), Tetrahydrofuran (THF), Methanol, Ethanol und Acetonitril.

Das optionale Lösungsmittel B aus Schritt ii) umfasst bevorzugt mindestens ein organisches Lösungsmittel oder eine Mischung mehrerer organischer Lösungsmittel, beispielsweise ein cyclisches oder acyclisches Amid, einen cyclischen oder acyclischen Ester, einen cyclischen oder acyclischen Ether oder einen cyclischen oder acyclischen Alkohol oder ein cyclisches oder acyclisches Nitril. Bevorzugt ist das Lösungsmittel ausgewählt aus der Gruppe bestehend aus Dimethylformamid (DMF), Dimethylacetamid (DMAC), N-Methylpyrrolidon, Dimethylsulfoxid (DMSO), Tetrahydrofuran (THF), Methanol, Ethanol und Acetonitril.

Lösungsmittel A und Lösungsmittel B können das gleiche oder unterschiedliche Lösungsmittel oder Lösungsmittelgemische sein, bevorzugt handelt es sich bei den Lösungsmitteln A und B um das gleiche Lösungsmitte bzw. Lösungsmittelgemisch.

Geeignete wenigstens zweizähnige organische Verbindungen sind beispielsweise DiCarbonsäuren, Tri-Carbonsäuren, Tetra-Carbonsäuren oder Pyridin-Derivate. Insbesondere kann die wenigstens zweizähnige Verbindung ausgewählt werden aus: substituierten oder unsubstituierten, ein- oder mehrkernigen aromatischen Di-, Tri- oder Tetra-Carbonsäuren und substituierten oder unsubstituierten, ein- oder mehrkernigen aromatischen, mindestens ein Heteroatom aufweisenden aromatischen Di-, Tri- oder Tetra-Carbonsäuren. Bevorzugt verfügt die mindestens zweizähnige organische Verbindung über mindestens zwei Carbonsäuregruppen und eine weitere zur Koordinierung mit der Edelmetallspezies geeignete funktionelle Gruppe. Im Einzelnen sind beispielhaft zu nennen substituierte oder unsubstituierte Di- oder Tri-carbonsäuren des Benzols, Naphthalins, Pyridins oder Chinolins. Bevorzugt weist die weitere zur Koordinierung mit der Edelmetallspezies geeignete funktionelle Gruppe mindestens ein Heteroatom auf, bevorzugt Stickstoff. Besonders bevorzugte wenigstens zweizähnige organische Verbindung sind 2-Amino-Terephtalsäure und 2,2'-Bipyridyl-5,5'-Dicarbonsäure.

Bevorzugt wird Schritt iii) bei einer Temperatur im Bereich von 20 bis 200 °C durchgeführt, besonders bevorzugt in einem Bereich von 50 bis 150 °C. Die Dauer des Schritts liegt bevorzugt in einem Bereich von 2 bis 24 h, besonders bevorzugt in einem Bereich von 3 bis 10 h.

Bevorzugt erfolgt das Erhitzen der Reaktionsmischung während Schritt iii) in einem geschlossenen Gefäß. Bevorzugt wird die Reaktionsmischung während Schritt iii) gerührt.

Besonders bevorzugt erfolgt das Erhitzen der Reaktionsmischung nicht unter erhöhtem Druck.

Typischerweise fällt während Schritt iii) ein Feststoff aus. Das Abtrennen und optional Reinigen des Feststoffs aus Schritt iii) kann mit dem Fachmann bekannten Verfahren erfolgen, beispielsweise durch Zentrifugieren, Extrahieren, Filtrieren, Dekantieren oder Abdestillieren des Lösungsmittels, optional im Vakuum.

Bevorzugt kann das anorganisch-organisches Hybridmaterialien hergestellt werden über Verfahren umfassend die Schritte

i) Bereitstellung einer Lösung umfassend Indium-Acetylacetonat oder Indium-Acetat in DMF;
ii) Zugabe von 2-Aminoterephtalsäure gelöst in DMF zu der Lösung aus Schritt i),
iii) Erhitzen der Lösung oder Suspension aus Schritt ii), wobei ein Feststoff ausfällt,
iv) Waschen mit DMF und Filtrieren des Feststoffs erhalten in Schritt iii),
v) optional Trocknen des Feststoffs erhalten in Schritt iv).

In Verfahrensschritt (b) wird das Indiumoxid-Vorläufermaterial mit einer Zusammensetzung imprägniert, die mindestens ein Lösungsmittel und mindestens eine Edelmetallverbindung umfasst.

Die Zusammensetzung kann eine Suspension sein. Unter einer Suspension wird eine Mischung aus einem Feststoff und einer Flüssigkeit verstanden, wobei der Feststoff gleichmäßig verteilt in Form von fein verteilten Festkörpern in der Flüssigkeit vorliegt. Die Zusammensetzung kann auch eine klare Lösung sein, d.h. eine Flüssigkeit, die frei von Kolloiden oder Präzipitaten ist. Bevorzugt umfasst die Zusammensetzung nur eine einzige Phase, d.h. die einzelnen Bestandteile der Zusammensetzung sind vollständig homogen durchmischt.

Ein "Lösungsmittel" bedeutet hierin, dass das Lösungsmittel mindestens eine flüssige Substanz umfasst, in welcher die mindestens eine Edelmetallverbindung löslich ist. Das mindestens eine Lösungsmittel kann mehrere chemische Substanzen enthalten, d. h. das organische Lösungsmittel kann auch ein Lösungsmittelgemisch sein.

Das mindestens eine Lösungsmittel kann ausgewählt sein aus der Gruppe bestehend aus Wasser und organischen Lösungsmitteln. Das organische Lösungsmittel kann aus einer Vielzahl üblicher organischer Lösemittel ausgewählt sein. Zweckmäßigerweise ist das organische Lösungsmittel unter den Verarbeitungsbedingungen der Zusammensetzung im Wesentlichen flüchtig, insbesondere gilt dies für das Stadium nach der Imprägnierung des Indiumoxid-Vorläufermaterials mit der Zusammensetzung.

Organische Lösungsmittel können beispielsweise cyclische oder acyclische Ketone, cyclische oder acyclische Amide, cyclische oder acyclische Ester oder cyclische oder acyclische Ether sein. Bevorzugt ist das mindestens eine Lösungsmittel ausgewählt aus der Gruppe bestehend aus Aceton, Methylethylketon, Methylisobutylketon, Cyclohexanon, Tetrahydrofuran (THF), 2-Methyl-Tetrahydrofuran, Dimethylformamid (DMF), Dimethylacetamid (DMAC), N-Methylpyrrolidon und Dimethylsulfoxid (DMSO).

In einer bevorzugten Ausführungsform umfasst die Zusammensetzung das Lösungsmittel zu 30 bis 99,5 Gew.-% (Gewichts-%), bezogen auf das Gesamtgewicht der Zusammensetzung. Vorteilhafterweise umfasst die Zusammensetzung das Lösungsmittel zu mindestens 50 Gew.-%, besonders bevorzugt zu mindestens 80 Gew.-%, ganz besonders bevorzugt zu mindestens 90 Gew.-%.

Die Zusammensetzung enthält außerdem mindestens eine Edelmetallverbindung.

Die Zusammensetzung kann nur eine Edelmetallverbindung oder mehrere Edelmetallverbindungen enthalten, im Fall von mehreren Edelmetallverbindungen kann es sich auch um Edelmetallverbindungen unterschiedlicher Edelmetalle handeln.

Geeignete Edelmetallverbindungen sind Komplexe, Organometallverbindungen oder Salze des jeweiligen Edelmetalls, beispielsweise Nitrate, Halogenide, Acetylacetonate oder Acetate, aber auch eine Vielzahl weiterer Salze, die dem Fachmann bekannt sind oder die er durch einfache Versuche auffinden kann.

Im Fall, dass es sich bei der mindestens einen Edelmetallverbindung um eine Platinverbindung handelt, kann es sich um eine Pt(II)- oder eine Platin(IV)-Verbindung handeln, z.B. ein Pt(II)- oder Pt(IV)-Salz, eine Pt(II)- oder Pt(IV)-Komplexverbindung oder eine Pt-Organometallverbindung. Als beispielhafte Platinverbindungen können ein Platinhalogenid, wie Platin(II)chlorid oder Platin(IV)chlorid oder eine Säure davon, Hexachloroplatinsäure oder ein Salz dieser Säure, Platinsäure oder ein Salz dieser Säure, Hydroxyethylammoniumhexahydroxoplatinat, Ammoniumhexachloroplatinat, Ammoniumtetrachloroplatinat, Kaliumtetrachloroplatinat, Kaliumhexachloroplatinat, Natriumtetrachloroplatinat, Kaliumtetrahydroxyplatinat, Platinnitrat, Platinacetylacetonat, Platinoxalat oder eine Mischung aus mindestens zwei dieser Verbindungen genannt werden.

Im Fall, dass es sich bei der mindestens einen Edelmetallverbindung um eine Palladiumverbindung handelt, kann es sich um eine Pd(II)- oder eine Pd(IV)-Verbindung handeln, z.B. ein Pd(II)- oder Pd(IV)-Salz, eine Pd(II)- oder Pd(IV)-Komplexverbindung oder eine Pd-Organometallverbindung. Als beispielhafte Palladiumverbindungen können ein Palladiumhalogenid, wie Palladium(II)chlorid, Palladium(II)bromid oder Palladium(IV)chlorid oder eine Säure davon, Palladiumacetat, Palladiumnnitrat, Palladiumacetylacetonat, Palladiumsulfat, Palladiumoxalat, Hydroxyethylammoniumhexahydroxopalladat, Ammoniumhexachloropalladat, Ammoniumtetrachloropalladat, Kaliumtetrachloropalladat, Kaliumhexachloropalladat, Natriumtetrachloropalladat, Kaliumtetrahydroxypalladat, Diammindichloropalladium, Tetraaminpalladiumnitrat, Tetraaminpalladiumchlorid, Tetraaminpalladiumhydroxid, Tetraaminpalladiumsulfat oder eine Mischung aus mindestens zwei dieser Verbindungen genannt werden.

Im Fall, dass es sich bei der mindestens einen Edelmetallverbindung um eine Rutheniumverbindung handelt, kann es sich um eine Ru(III)- oder eine Ru(IV)-Verbindung handeln, z.B. ein Ru(III)- oder Ru(IV)-Salz, eine Ru(III)- oder Ru(IV)-Komplexverbindung oder eine Ru-Organometallverbindung. Als beispielhafte Rutheniumverbindungen können ein Rutheniumhalogenid, wie Ruthenium(III)chlorid, oder eine Säure davon, Rutheniumnitrat, Rutheniumacetylacetonat, Rutheniumoxalat, Hexaamminrutheniumchlorid, Pentaaminchlororuthen oder eine Mischung aus mindestens zwei dieser Verbindungen genannt werden.

Im Fall, dass es sich bei der mindestens einen Edelmetallverbindung um eine Rhodiumiumverbindung handelt, kann es sich bevorzugt um eine Rh(III)-Verbindung handeln, z.B. ein Rh(III)-Salz, eine Rh(III)-Komplexverbindung oder eine Rh-Organometallverbindung. Als beispielhafte Rhodiumverbindungen können ein Rhodiumhalogenid, wie Rhodium(III)chlorid, oder eine Säure davon, Rhodiumnitrat, Rhodiumacetylacetonat, Rhodiumumsulfat oder eine Mischung aus mindestens zwei dieser Verbindungen genannt werden.

Im Fall, dass es sich bei der mindestens einen Edelmetallverbindung um eine Silberverbindung handelt, kann es sich bevorzugt um eine Ag(I)-Verbindung handeln, z.B. ein Ag(I)-Salz, eine Ag(I)-Komplexverbindung oder eine Ag-Organometallverbindung. Als beispielhafte Silberverbindungen können ein Silberhalogenid, wie Silber(I)chlorid, Silbernitrat, Silberacetat, Silberacetylacetonat, Silbersulfat, ein Silberoxid oder eine Mischung aus mindestens zwei dieser Verbindungen genannt werden.

Im Fall, dass es sich bei der mindestens einen Edelmetallverbindung um eine Goldverbindung handelt, kann es sich bevorzugt kann es sich um eine Au(I)- oder eine Au(III)-Verbindung, z.B. ein Au(I)- oder ein Au(III)-Salz, eine Au(I) oder Au(III)-Komplexverbindung oder eine Au-Organometallverbindung handeln. Als beispielhafte Goldverbindungen können ein Goldhalogenid, wie Gold(I)chlorid, Tertrachloroaurat, Tetrachloridogoldsäure oder eine Mischung aus mindestens zwei dieser Verbindungen genannt werden.

Im Fall, dass es sich bei der mindestens einen Edelmetallverbindung um eine Iridiumverbindung handelt, kann es sich bevorzugt um eine Ir(IV)-Verbindung handeln, z.B. ein Ir(IV)-Salz, eine Ir(IV)-Komplexverbindung oder eine Ir-Organometallverbindung. Als beispielhafte Iridiumverbindungen können ein Iridiumhalogenid, wie Iridium(IV)chlorid, Iridiumnitrat, Iridiumacetat, Iridiumacetylacetonat, Iridiumsulfat, Dihydrogenhexachloroiridat oder eine Mischung aus mindestens zwei dieser Verbindungen genannt werden.

Die Menge des mindestens einen Edelmetalls in der Zusammensetzung kann in weiten Bereichen variieren und wird bestimmt durch die beabsichtige Beladung der Edelmetallspezies im herzustellenden Indiumoxid-basierten Katalysatormaterial. Die "Menge des mindestens einen Edelmetalls" bezieht sich auf den Edelmetallanteil in der Zusammensetzung, mit anderen Worten wird damit nicht die Menge der gesamten Edelmetallverbindung bezeichnet. Bevorzugt umfasst die Zusammensetzung 0,01 bis 80 Gew.-% des mindestens einen Edelmetalls, bezogen auf das Gesamtgewicht der Zusammensetzung umfassend das mindestens eine Lösungsmittel und die mindestens eine Edelmetallverbindung. In einer Ausführungsform umfasst die Zusammensetzung 0,1 bis 60 Gew.-% Edelmetall, bevorzugt 1 bis 50 Gew.-%. Besonders gute Ergebnisse werden erhalten, wenn die Zusammensetzung das mindestens eine Edelmetall in einer Menge von mindestens 0,01 Gew.-% enthält, insbesondere mindestens 0,3 Gew.-%, vorzugsweise mindestens 0,5 Gew.-%, bevorzugt mindestens 1,0 Gew.-%.

Bevorzugte Zusammensetzungen können durch einfaches Vermischen des mindestens einen Lösungsmittels und der mindestens einen Edelmetallverbindung hergestellt werden. Der Fachmann wählt dabei das Mengenverhältnis der Bestandteile angepasst an den jeweiligen Verwendungszweck und/oder die dabei zur Anwendung kommende Imprägnierungsmethode aus. Die Zusammensetzung kann auch in Anwesenheit des Indiumoxid-Vorläufermaterials hergestellt werden, d.h. das Lösungsmittel wird mit den festen Komponenten (dem Indium-Vorläufermaterial und der mindestens einen Edelmetallverbindung) vermischt.

Die Zusammensetzung kann auch weitere Komponenten, wie beispielweise Säuren, enthalten.

Als Ergebnis des Schritts (b) wird ein imprägniertes Indiumoxid-Vorläufermaterial erhalten, d.h. ein mit der mindestens einen Verbindung des mindestens einen Edelmetalls beladenes Indiumoxid-Vorläufermaterial. Bevorzugt wird eine homogene bzw. gleichmäßige Beladung des Indiumoxid-Vorläufermaterials mit dieser mindestens einen Edelmetallverbindung erreicht.

Unter Imprägnierung wird im Allgemeinen das Zusammenbringen eines Materials mit einer Verbindung und die daraus resultierende Adsorption der Verbindung auf der Oberfläche des Materials verstanden. Im Fall eines porösen Materials handelt es sich dabei insbesondere auch um eine innere, d.h. innerhalb der Poren liegende, Oberfläche. Dem Fachmann sind verschiedene Imprägnierverfahren bekannt, beispielsweise kapillarkontrolliertes Imprägnieren (so genannte "incipient wetness" Methoden) und diffusionskontrolliertes Imprägnieren (so genannte adsorptionskontrollierte Methoden). Für das erfindungsgemäße Verfahren sind prinzipiell beide Herangehensweisen geeignet.

Dabei wird das zu imprägnierende Material, im vorliegenden Fall das Indiumoxid-Vorläufermaterial, mit der Zusammensetzung in Kontakt gebracht.

Das Zusammenbringen erfolgt beispielsweise dadurch, dass die Zusammensetzung zu einer Lösung oder Suspension des Indiumoxid-Vorläufermaterials in einem Lösungsmittel gegeben wird und diese Mischung gemischt wird. Es ist jedoch auch möglich, die Zusammensetzung auf das Indiumoxid-Vorläufermaterial aufzusprühen oder das Indiumoxid-Vorläufermaterial zu der Zusammensetzung zu geben und diese Mischung dann zu durchmischen. Verfahren zum Durchmischen solcher Mischungen sind dem Fachmann bekannt und umfassen beispielsweise Rühren oder Kneten, wobei Zwangsmischer, Freifallmischer, Rührer, Kneter, Strömungsmischer oder Mischpumpen zum Einsatz kommen können.

Bevorzugt wird die Reaktionsmischung, enthaltend das Indiumoxid-Vorläufermaterial und die Zusammensetzung, während des Imprägnierschritts kontinuierlich durchmischt.

In einer bevorzugten Ausführungsform liegt das Indiumoxid-Vorläufermaterial während des Imprägnierschritts suspendiert in der Zusammensetzung vor.

In einer alternativen Ausführungsform liegt das Indiumoxid-Vorläufermaterial während des Imprägnierschritts in Form eines getränkten Pulvers vor. Darunter ist zu verstehen, dass die Zusammensetzung nur in einem solchen Ausmaß zugegeben wird, dass das Indiumoxid-Vorläufermaterial benetzt wird. Dem Fachmann ist bekannt, dass die Menge an eingesetzter Zusammensetzung in diesem Fall mit dem Porenvolumen des Indiumoxid-Vorläufermaterials zusammenhängt.

Der Imprägnierschritt kann bei Raumtemperatur durchgeführt werden. Der Imprägnierschritt kann jedoch ebenso bei einer gegenüber Raumtemperatur verringerten oder erhöhten Temperatur durchgeführt werden. Während des Imprägnierschritts kann die Temperatur der Mischung, enthaltend das Indiumoxid-Vorläufermaterial und die Zusammensetzung, beispielsweise 10 °C bis 90 °C betragen, bevorzugter 20 °C bis 80 °C.

Die Dauer des Imprägnierschritts wird so gewählt, dass sich die mindestens eine Edelmetallverbindung in ausreichender Menge auf dem Indiumoxid-Vorläufermaterial abscheiden kann. Eine geeignete Zeitdauer kann der Fachmann anhand von Routineversuchen ermitteln.

Bevorzugt scheidet sich die mindestens eine Edelmetallverbindung vollständig aus der Zusammensetzung auf dem Indiumoxid-Vorläufermaterial ab.

Die eingesetzte Menge des Indiumoxid-Vorläufermaterials während des Imprägnierschritts hängt von der gewünschten Menge des Edelmetalls ab, mit dem das Indiumoxid-Katalysatormaterial ausgestattet werden soll und damit auch von der Konzentration der mindestens einen Edelmetallverbindung in der Zusammensetzung.

Für den Fall, dass das Indiumoxid-Vorläufermaterial gleichzeitig mit mehreren Edelmetallverbindungen imprägniert werden soll, kann es bevorzugt sein, die betreffenden Verbindungen in einer Zusammensetzung bereitzustellen. Es kann aber auch bevorzugt sein, die betreffenden Verbindungen in separaten Zusammensetzungen bereitzustellen. Im letztgenannten Fall kann die Imprägnierung mit den mehreren Edelmetallverbindungen in einem Schritt oder in mehreren Schritten erfolgen. Alle Varianten eignen sich, um das Indiumoxid-Vorläufermaterial gleichzeitig mit beispielsweise Platin und Palladium auszustatten.

Optional kann das imprägnierte Indiumoxid-Vorläufermaterial, das nach Schritt b) erhalten wurde, vor Durchführung der thermischen Behandlung in Schritt c) zunächst getrocknet und dabei teilweise oder vollständig vom Lösungsmittel befreit werden.

Bevorzugt kann sein, das imprägnierte Indiumoxid-Vorläufermaterial abzufiltrieren und zu trocknen. Das Trocknen des imprägnierten Indiumoxid-Vorläufermaterials erfolgt beispielsweise bei einer Temperatur unterhalb von 250 °C, bevorzugter unterhalb von 200 °C, noch bevorzugter unterhalb von 150 °C. Insbesondere kann das Trocknen unter vermindertem Druck erfolgen, bevorzugt bei einem Druck von unter 300 mbar. Bevorzugt erfolgt das Trocknen für einen Zeitraum von 0,5 h bis 24 h, bevorzugt für einen Zeitraum von 2 h bis 20 h.

In Schritt (c) wird das mit der mindestens einen Edelmetallverbindung imprägnierte Indiumoxid-Vorläufermaterial thermisch behandelt. Dem Fachmann ist eine solche thermische Behandlung auch als Kalzinieren bekannt.

Als weiterer Vorteil des erfindungsgemäßen Verfahrens ist zu nennen, dass die mindestens eine Indiumoxid-Spezies und die katalytisch aktive Edelmetallspezies gleichzeitig, also in einem Verfahrensschritt, hergestellt bzw. generiert werden. Dadurch kann eine homogene Verteilung der Edelmetallspezies innerhalb und auf dem Indiumoxid-basierten Katalysatormaterial erreicht werden. Durch eine hohe und steuerbare Porosität des Indiumoxid-Vorläufermaterials kann außerdem eine hohe Porosität des Indiumoxid-basierten Katalysatormaterials erreicht werden.

Des Weiteren ermöglicht das erfindungsgemäße Verfahren die Herstellung des Indiumoxid-basierten Katalysatormaterials ohne ein separates Aufbringen der Edelmetallspezies erst nach Herstellung oder Bereitstellung der Indiumoxid-Spezies, was das Verfahren insgesamt einfacher, unanfälliger und wirtschaftlich vorteilhaft gestaltet.

In einer Ausführungsform führt die thermische Behandlung des mit der Edelmetallverbindung imprägnierte Indiumoxid-Vorläufermaterial zur Umsetzung des Indiumoxid-Vorläufermaterials in eine Indiumoxid-Spezies, besonders bevorzugt in $In_2O_3$ und zur Zersetzung der mindestens einen Edelmetallverbindung unter Bildung der katalytisch aktiven Edelmetallspezies.

Die thermische Behandlung kann insbesondere in einem geschlossenen Gefäß erfolgen. Die thermische Behandlung kann in Luftatmosphäre durchgeführt werden.

Die Temperatur der thermischen Behandlung richtet sich nach der Umsetzungstemperatur des Indiumoxid-Vorläufermaterials und/oder der mindestens einen Edelmetallverbindung. Die thermische Behandlung kann bei einer Temperatur von weniger als 1000 °C, 900 °C, 800 °C, 700 °C, 600 °C, 500 °C oder weniger als 400 °C stattfinden. Bevorzugt wird das imprägnierte Indiumoxid-Vorläufermaterial bei einer Temperatur von mehr als 200 °C thermisch behandelt, besonders bevorzugt bei einer Temperatur höher als 250 °C. In einer bevorzugten Ausführungsform wird das imprägnierte Indiumoxid-Vorläufermaterial bei einer Temperatur von 200 °C bis 800 °C thermisch behandelt, bevorzugt bei einer Temperatur von 300 °C bis 600 °C. Im Allgemeinen erfolgt die thermische Behandlung über einen Zeitraum von weniger als 24 h, bevorzugt weniger als 10 h, besonders bevorzugt weniger als 8 h. Die thermische Behandlung kann für einen Zeitraum von 2 h bis 15 h erfolgen, insbesondere für 3 bis 10 h. In einer bevorzugten Ausführungsform wird die thermische Behandlung bei 300 °C bis 600 °C für 2 h bis 8 h unter Luftatmosphäre durchgeführt.

Die vorliegende Erfindung betrifft außerdem ein mit mindestens einem Edelmetall ausgestattetes Indiumoxid-basiertes Katalysatormaterial, erhältlich durch ein wie oben beschriebenes Verfahren. Für bevorzugte Ausführungsformen sei auf die obigen Ausführungen verwiesen.

Das erfindungsgemäß mit mindestens einem Edelmetall ausgestattete Indiumoxid-basierte Katalysatormaterial kann auch vermischt mit weiteren Komponenten eingesetzt werden, insbesondere anorganischen Komponenten, beispielsweise vermischt mit einer katalytisch nicht aktiven Komponente wie einem Titanoxid oder einem Siliziumoxid.

Das erfindungsgemäß hergestellte mit mindestens einem Edelmetall ausgestattete Indiumoxid-basierte Katalysatormaterial ist beispielsweise besonders für den Einsatz in der katalytischen Hydrierung von $CO_2$ zu Methanol geeignet.

Weiterhin betrifft die vorliegende Erfindung die Verwendung des oben beschriebenen mit mindestens einem Edelmetall ausgestatteten Indiumoxid-basierten Katalysatormaterials als Katalysator.

Das mit mindestens einem Edelmetall ausgestattete Indiumoxid-basierte Katalysatormaterial kann bevorzugt als Katalysator für Hydrierungsreaktionen, vor allem die Herstellung von Methanol und Ameisensäure aus $CO_2$, die Synthesegasherstellung oder die reverse Wassergas-Konvertierungsreaktion verwendet werden.

Das erfindungsgemäß hergestellte mit mindestens einem Edelmetall ausgestattete Indiumoxid-basierte Katalysatormaterial ist besonders für den Einsatz in der katalytischen Hydrierung von $CO_2$ zu Methanol geeignet.

Das mit mindestens einem Edelmetall ausgestattete Indiumoxid-basierte Katalysatormaterial ist bei bestimmungsgemäßer Verwendung als Katalysator insbesondere dahingehend vorteilhaft, dass man die Katalysatoreigenschaften einerseits durch Variation der wenigstens zweizähnigen organischen Verbindung des Indiumoxid-Vorläufermaterials anpassen bzw. maßschneidern kann und zum anderen durch die Wahl des Edelmetalls die Aktivität und Selektivität für die jeweilige Reaktion beeinflussen kann.

Die Verwendung kann je nach katalysierter Reaktion in flüssiger, gasförmiger oder überkritischer Phase erfolgen.

Je nach Einsatzgebiet kann das durch das erfindungsgemäße Verfahren erhaltene mit mindestens einem Edelmetall ausgestattete Indiumoxid-basierte Katalysatormaterial in Pulverform, verpresst als Stränge, Pellets, Granulate, Ringe oder auf Trägerkörper aufgebracht als Katalysator verwendet werden. Solche Trägerkörper sind dem Fachmann prinzipiell bekannt. Als Material eignen sich zum Beispiel Metalle oder Metalllegierungen, keramische Materialien, Oxide und beliebige Kombinationen davon. Typischerweise weist der Träger keine katalytische Aktivität auf. Solche Trägerkörper weisen beispielsweise die Form von Schäumen, Drähten, Drahtgeflechten, Geweben, Gestrickten, Netzen, Kugeln, Zylindern, Ringen oder Waben auf. Vorteilhaft kann es sein, dass es sich bei dem Trägerkörper um einen monolithischen Trägerkörper handelt. Zum Aufbringen des Katalysatormaterials auf einen Trägerkörper sind eine Reihe von Verfahren bekannt. Das Aufbringen kann beispielsweise erfolgen, indem das Katalysatormaterial in einer geeigneten Beschichtungssuspension, umfassend ein Lösungsmittel und das Katalysatormaterial, auf den Trägerkörper aufgebracht wird. Zweckmäßig wird in diesem Fall das Katalysatormaterial pulverförmig eingesetzt. Das Aufbringen kann dabei durch Tauchen, Übergießen, Einpumpen oder Durchsaugen des Trägerkörpers mit der Beschichtungssuspension erfolgen. Anschließend kann ein Trocknungsschritt erfolgen.

Das erfindungsgemäß mit mindestens einem Edelmetall ausgestattete Indiumoxid-basierte Katalysatormaterial kann auch vermischt mit weiteren Komponenten eingesetzt werden, insbesondere anorganischen Komponenten, beispielsweise vermischt mit einer katalytisch nicht aktiven Komponente wie einem Titanoxid oder einem Siliziumoxid.

Die vorliegende Erfindung betrifft außerdem ein Verfahren zur Herstellung von Methanol unter Verwendung des erfindungsgemäßen mit mindestens einem Edelmetall ausgestatteten Indiumoxid-basierten Katalysatormaterials, umfassend die Schritte:

(a) Bereitstellung des mit mindestens einem Edelmetall ausgestatteten Indiumoxid-basierten Katalysatormaterials,
(b) Bereitstellung eines Gasgemischs, umfassend mindestens ein Kohlenstoffoxid und Wasserstoff,
(c) Kontaktieren des mit mindestens einem Edelmetall ausgestatteten Indiumoxid-basierten Katalysatormaterials mit dem Gasgemisch.

Es hat sich herausgestellt, dass das erfindungsgemäße Verfahren zur Herstellung von Methanol unter Verwendung des erfindungsgemäßen Katalysatormaterials besonders geeignet ist, um selektiv Methanol aus $CO_2$ herzustellen. Außerdem wurde im Rahmen der vorliegenden Erfindung erkannt, dass entsprechende Verfahren eine erhöhte Ausbeute des gewünschten Produkts, ausgedrückt durch die spezifische Produktleistung, ermöglichen. Die spezifische Produktleistung wird, wie dem Fachmann im Bereich der Katalyse bekannt, definiert durch die Menge an Produkt pro eingesetzter Menge Katalysator pro Zeiteinheit. Die Menge an Katalysator und die Menge an Produkt kann hierbei auf Volumen, Masse oder Stoffmenge bezogen werden. Eine alternative Bezeichnung für die Spezifische Produktleistung ist die Raum-Zeit-Ausbeute (*engl. space-time-yield*, STY).

Das in Schritt (b) bereitgestellte Gasgemisch umfasst mindestens ein Kohlenstoffoxid und Wasserstoff.

Das Kohlenstoffoxid ist bevorzugt ausgewählt aus Kohlenstoffmonoxid, Kohlenstoffdioxid oder einer Mischung der beiden Kohlenstoffoxide.

Das Gasgemisch umfasst bevorzugt mindestens 3 mol-% $CO_2$, bezogen auf die Gesamtzusammensetzung des Gasgemischs, bevorzugter mindestens 5 mol-%, noch bevorzugter mindestens 20 mol-%. Das Gasgemisch umfasst bevorzugt nicht mehr als 40 mol-% $CO_2$, bezogen auf die Gesamtzusammensetzung des Gasgemischs, bevorzugter nicht mehr als 35 mol-%, noch bevorzugter nicht mehr als 30 mol-%.

Das Gasgemisch kann mindestens 1 mol-% CO umfassen, bezogen auf die Gesamtzusammensetzung des Gasgemischs, bevorzugter mindestens 5 mol-%, noch bevorzugter mindestens 10 mol-%. Das Gasgemisch kann bevorzugt nicht mehr als 75 mol-% CO, bezogen auf die Gesamtzusammensetzung des Gasgemischs, bevorzugter nicht mehr als 65 mol-%, noch bevorzugter nicht mehr als 50 mol-%.

Das Gasgemisch umfasst bevorzugt mindestens 10 mol-% molekularen Wasserstoff, bezogen auf die Gesamtzusammensetzung des Gasgemischs, bevorzugter mindestens 20 mol-%, noch bevorzugter mindestens 30 mol-%. Das Gasgemisch umfasst bevorzugt nicht mehr als 90 mol-% molekularen Wasserstoff, bezogen auf die Gesamtzusammensetzung des Gasgemischs, bevorzugter nicht mehr als 80 mol-%, noch bevorzugter nicht mehr als 60 mol-%.

Bevorzugt beträgt das molekulare Verhältnis von Kohlenstoffdioxid zu Wasserstoff ($CO_2 : H_2$) wenigstens 1 : 1, bevorzugter wenigstens 1 : 3, am bevorzugtesten wenigstens 1 : 4.

In Schritt (c) wird das mit mindestens einem Edelmetall ausgestattete Indiumoxid-basierte Katalysatormaterial mit dem Gasgemisch kontaktiert. Bevorzugt erfolgt die Kontaktierung bei einer Temperatur von mindestens 50 °C, bevorzugter bei mindestens 100 °C, am bevorzugtesten bei mindestens 200 °C. In einer bevorzugten Ausführungsform erfolgt die Kontaktierung bei einer Temperatur zwischen 50 °C und 700 °C, bevorzugter zwischen 100 °C und 600 °C, am bevorzugtesten zwischen 150 °C und 500 °C. Bevorzugt erfolgt die Kontaktierung unter einem Druck von mindestens 1 MPa, noch bevorzugter unter einem Druck von mindestens 2 MPa, am bevorzugtesten unter einem Druck von mindestens 4 MPa. Bevorzugt erfolgt die Kontaktierung unter einem Druck von nicht mehr als 50 MPa, noch bevorzugter unter einem Druck von nicht mehr als 25 MPa, am bevorzugtesten unter einem Druck von nicht mehr als 10 MPa. Vorzugsweise erfolgt die Kontaktierung über einen Zeitraum von mehr als 100 h, mehr als 1000 h, am bevorzugtesten mehr als 10000 h, ohne dass das mit mindestens einem Edelmetall ausgestattete Indiumoxid-basierte Katalysatormaterial ausgetauscht wird.

In einer bevorzugten Ausführungsform erfolgt die Kontaktierung bei einem Druck von 1 - 30 MPa, in einem Temperaturbereich von 150 °C - 350 °C mit einem Gasgemisch mit einem molaren Verhältnis von $H_2$ zu $CO_2$ von 4 : 1 über einen Zeitraum von 2 bis 6 h.

Bevorzugt wird das erfindungsgemäße Verfahren zur Herstellung von Methanol in einem Reaktor durchgeführt. In einer vorteilhaften Ausführungsform umfasst der Reaktor ein Reaktionsgefäß, geeignet zur Bereitstellung des mit mindestens einem Edelmetall ausgestatteten Indiumoxid-basierten Katalysatormaterials. Bevorzugt kann der Reaktor auch mindestens eine weitere Komponente umfassen, ausgewählt aus

- Leitungen, um das Gasgemisch zu einem Reaktionsgefäß zu führen und um Reaktionsprodukte zu entfernen;
- einer Vorrichtung geeignet zum Erhitzen des Reaktionsgefäßes;
- einem Temperatursensor;
- einer Kontrollvorrichtung, geeignet zur Kontrolle der Vorrichtung zum Erhitzen des Reaktionsgefäßes;
- einem Durchflusssensor;
- einen Drucksensor;
- eine Kontrollvorrichtung, geeignet zur Kontrolle des Drucks;
- eine Kontrollvorrichtung, geeignet zur Kontrolle des Durchflusses des Gasgemisches.

Das erfindungsgemäße Verfahren zur Herstellung von Methanol kann auch weitere Schritte umfassen.

Beispielsweise kann das mit mindestens einem Edelmetall ausgestatte Indiumoxid-basierte Katalysatormaterial vor der Bereitstellung in Schritt (a) einem Aktivierungsschritt unterzogen werden.

Die Aktivierung kann in reduzierender Atmosphäre, beispielsweise in einer WasserstoffAtmosphäre oder in inerter Atmosphäre, beispielsweise in einer Edelgas- oder Stickstoffatmosphäre erfolgen. Bevorzugt kann sein, dass die Aktivierung bei erhöhter Temperatur durchgeführt wird, beispielsweise bei einer Temperatur im Bereich von 100 °C bis 400 °C. Bevorzugt kann die die Aktivierung über einen Zeitraum von mindestens 1 h erfolgen, bevorzugter über mindestens 2 h.

Bevorzugt erfolgt die Aktivierung unter Intergasatmosphäre bei 200 °C bis 300 °C über einen Zeitraum von 1 bis 3 h.

Das erfindungsgemäße Verfahren zur Herstellung von Methanol kann außerdem Schritte zur Isolierung und/oder Reinigung des Methanols umfassen. Die Isolierung des Methanols kann mit dem Fachmann bekannten Methoden erfolgen, beispielsweise durch Destillation.

Nachfolgend sind die in der vorliegenden Erfindung verwendeten Messmethoden angegeben. Falls keine Testmethode angegeben ist, wurde die entsprechende ISO Methode zur Bestimmung des betreffenden Parameters verwendet, in der gültigen Fassung zum Anmelde-Zeitpunkt der vorliegenden Anmeldung. Falls keine spezifischen Messbedingungen angegeben sind, erfolgte die Messung bei Raumtemperatur (298.15 K) und Normaldruck (100 kPa).

**Messmethoden**

Röntgen-Pulverdiffraktometrie (XRD)

Pulverdiffraktometrie wurde auf einem SmartLab Diffraktometer (Rigaku) gemessen. Die Röntgenquelle bildete eine rotierente zylindrische Anode aus Kupfer, die linear fokussiert mit einem planaren Spiegel einen divergenten Strahl mit einem Öffnungswinkel von 0,5 ° erzeugt. Die Breite der emittierten Röntgenstrahlung wurde mit einer Blende mit 10 mm beschränkt. Die Leistung an der Röntgenquelle betrug 8,1 kW, wobei eine Beschleunigungsspannung von 45 kV und ein Filamentstrom von 180 mA eingestellt wurde. Der zweidimensionale Halbleiterdetektor vom Typ HyPix-3000 wurde für die Messung der polykristallinen Pulverproben auf eine aktive Fläche von $20 \times 20$ mm beschränkt. Der Detektor wurde in einem eindimensionalen Modus auf einer Länge von 20 mm verwendet, der die divergent gestreute Strahlung von der Probe simultan verarbeitet.

Die Messung der Proben erfolgte in Bragg-Brentano-Geometrie. Als Probenhalter diente ein Glasträger mit einer Einfräsung der Fläche $20 \times 20$ mm und einer Tiefe von 0,5 mm. Das Pulver der Probe wurde in die Einfräsung aufgetragen, gleichmäßig verteilt, komprimiert und mit einer scharfen Klinge abgezogen.

Zur Einstellung der verwendeten Schrittweite des Goniometers während er Messung wurde mit einer Schrittweite von 0.01 ° (50 °/min Messgeschwindigkeit) eine Vormessung durchgeführt. Die Schrittweite der Hauptmessung wurde so eingestellt, dass die geringste Halbwertsbreite der Intensitätspeaks mit 10 Datenpunkten dargestellt werden kann. Die verwendete Messgeschwindigkeit der Hauptmessung wurde in Abhängigkeit der gestreuten Intensitäten auf ca. 10 °/min reduziert.

Die Messdaten wurden mit der Software SmartLab Studio II (Version 4.4.208.0) ausgewertet. Für die Identifikation der Phasen stand die Datenbank der Crystallographic Open Database (COD) der Version COD 2019.10.15 zur Verfügung.

Die mittlere Kristallitgröße L wurde gemäß der Scherrer-Gleichung ermittelt, indem die Halbwertsbreite (FWHM) des charakteristischen Reflexes über einen Peakfit angepasst wurden. Hierfür wurde Origin Pro 2020 verwendet um die Scherrer-Methode bzw. Scherrer-Gleichung zu fitten.

Die dem Fachmann bekannte Scherrer-Gleichung lautet:

$$L = (K * \lambda) / (\Delta\theta * \cos\Theta)$$

wobei

L die mittlere Kristallitgröße in nm ist,
K der Scherrer Faktor ist,
$\lambda$ die Röntgenwellenlänge ist,
$\Delta\theta$ die Halbwertesbreite (FWHM) eines Reflexes im Diffraktogramm in rad ist,
$\Theta$ der Bragg-Winkel ist.

Für den Scherrer-Faktor wurde ein Wert von 0,94 verwendet.

Spezifische BET-Oberfläche

Die spezifische BET-Oberfläche wurde mit Stickstoff als Adsorbat bei 77 K gemäß der BET-Theorie bestimmt (Mehrpunkt-Methode, ISO 9277:2010).

Porenvolumen und Porendurchmesserverteilung

Das Porenvolumen und die Porendurchmesserverteilung wurde gemäß BJH nach DIN 66134:1998-02 bestimmt.

Bestimmung des Edelmetallgehalts via ICP-MS

Der Edelmetallgehalt wurde mithilfe von Massenspektrometrie mit induktiv gekoppeltem Plasma (*engl. inductively coupled plasma mass spectrometry,* ICP-MS) bestimmt. Zunächst wurden 100 mg der Probe in 10 mL Königswasser aufgeschlossen. Anschließend wurde die Lösung mit 18,2 MΩ cm$^{-1}$ Wasser auf 50 mL aufgefüllt. Diese Stammlösung wurde anschließend verdünnt, um eine Konzentration im Bereich von 500-1000 ppb Edelmetall (Kalibrierbereich) in Lösung zu erhalten. Diese Lösung wurde ein zweites Mal verdünnt um eine Konzentration im Bereich von 500-1000 ppb Indium (Kalibrierbereich) in Lösung zu erhalten. Die Kalibrierung erfolgte mit Summenstandards für Palladium und Platin (High Purity Standards, ICP-MS-68B Solution C, 100 mg/L) und Indium (Merck, Certipur Multielement standard XXI (no Hg), 10 mg/L).

TEM- und EDX-Charakterisieung

Die bildgebende Charakterisierung erfolgte durch TEM-Messungen (Transmissionselektronenmikroskopie), die Verteilung der Edelmetallpartikel auf dem Katalysatormaterial wurde durch EDX-Messungen (energiedispersive Röntgenspektroskopie, *engl. energy dispersive X-ray spectroscopy)* abgebildet.

Es wurden wenige μg des zu untersuchenden Materials in Ethanol suspendiert. Anschließend wurde ein Tropfen der Suspension auf ein Kohle-Lochfilm-beschichtetes Cu-Plättchen (Plano, 200 mesh) pipettiert und getrocknet. Die Messungen wurden in einem FEI Talos 20-200 Transmissionsmikroskop bei 200 kV durchgeführt.

Headspace-Gaschromatographie mit Flammenionisationsdetektor (HS-GC-FID)

Die molare Zusammensetzung der Produkte der katalytischen Hydrierung von $CO_2$ wurden mittels HS-GC-FID (Thermo Electron Trace GC Ultra, Säule: WCOT Fused Silica 60 m × 0.25 mm, CP Wax 52CB DF = 0.25 μm) charakterisiert.

Die Kalibrierung zur Bestimmung von Methanol erfolgte über die Vermessung von 4 externen Methanol-Standards. Hierfür wird eine 10 v% MeOH Lösung in Acetonitril hergestellt. Diese wurde anschließend 1:10, 1:100 und 1:1000 verdünnt. Jeweils 10 μL einer Lösung werden mithilfe einer 10 μL Hamilton-Spritze in einem mit einer Septum Butyl Bördelkappe versiegelten 20 mL Headspace Vial transferiert. Anschließend wird diese Probe mit einer totalen Verdampfungsmethode durch HS-GC-FID analysiert. Mithilfe der Dichte von Acetonitril/MeOH-Mischungen und der protokollierten Masse bei der Herstellung der Standards wurde eine Kalibriergerade in Bezug auf die Methanolmasse erstellt. Die Kalibrierung zur Bestimmung von Methan erfolgte analog unter Verwendung tabellierter Referenzwerte für den Responsefaktor für Methanol bzw. Methan (siehe https://www.che.psu.edu/faculty/rioux/group/group_info/references/response_factors_for_gas_c hromatographic_analyses.pdf, Stand 16.09.2021).

Die Aktivität des Katalysators, repräsentiert durch die spezifische Produktleistung (*engl. space time yield, STY*) wurde über die folgende Gleichung bestimmt:

$$STY = \frac{A}{k \cdot m_{cat} \cdot V_v} \cdot V_g$$

Mit:

A - Peakfläche
k - Steigung der Kalibriergeraden
$V_v$ - Volumen des Rollrandfläschchen (in cm$^3$)
$m_{cat}$ - Masse des Katalysators (in g)
$V_g$ - Volumensstrom ( in cm$^3$/min)

Anhand der nachfolgenden Beispiele wird die Erfindung eingehender erläutert. Die Beispiele sind jedoch nicht als einschränkend zu verstehen.

VM1 - Herstellung eines In-Vorläufermaterials aus Indium und 2-Aminopterephtalsäure (NH$_2$-MIL-68(In)) unter Basenzusatz

Zu einer Lösung aus 4 mmol (1.49 g, In(NO$_3$)$_3$•x H$_2$O) in 10 mL DMF wurde eine Lösung aus 3.3 mmol 2-Aminoterephthalsäure in 5 mL DMF gegeben. Die vereinigten Lösungen wurden in einem geschlossenen Behälter bei 100 °C über 10 min gerührt. Im Anschluss wurde unter weiterem Rühren eine weitere Lösung aus 6.7 mmol Base (Dimethylamin (DMA), 1,1,3,3-Tetramethylguanidin (TMG) oder Natriumacetat) in 5 mL DMF zugegeben und für weitere 4 h bei 100°C gerührt, dabei fiel ein blass-gelber Niederschlag aus.

Zur Reinigung wurde die Reaktionsmischung anschließend bei 4000 rpm für 30 min zentrifugiert und die überstehende Lösung abdekantiert. Der zurückbleibende Feststoff wurde dreimal mit 10 mL DMF suspendiert und gewaschen, erneut abzentrifugiert und die darüberstehende Lösung abdekantiert. Anschließend wurde der Feststoff über Nacht in 10 mL DMF eingelegt.

Nach erneutem Abzentrifugieren und Abdekantieren der überstehenden DMF-Lösung wurde der Feststoff dreimal mit Ethanol gewaschen und über Nacht in Ethanol eingelegt. Das Produkt wurde abschließend bei 80 °C im Trockenschrank für 24 h getrocknet. Es wurde ein feines, blass-gelbes bis beiges Pulver erhalten, dass über XRD charakterisiert wurde.

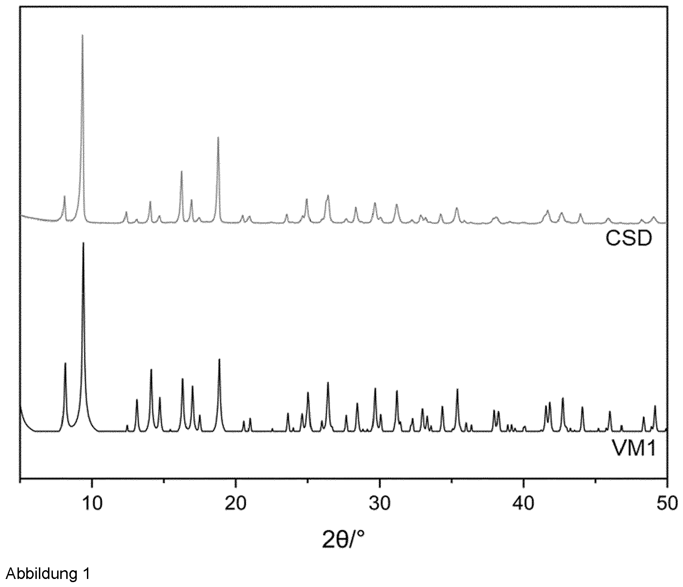

Das XRD-Spektrum des Materials ist im Vergleich zu einer charakteristischen Datenbank-Referenz für NH$_2$-MIL-68(In) der Cambridge Structural Databse (CSD, 1824633, DOI: https://dx.doi.org/10.5517/ccdc.csd.cc1z7p41) in Abbildung 1 gezeigt.

VM2 - Herstellung von NH$_2$-MIL-68(In) ohne Basenzusatz

Zu einer Lösung aus 4 mmol (1.65 g) In-Acetylacetonat (In(acac)$_3$) in 15 mL DMF wurde unter Rühren bei 100 °C eine Lösung aus 3.3 mmol (601.4 mg) 2-Aminoterephthalsäure in 5 mL DMF und 250 μL Wasser gegeben. Die vereinigten Lösungen wurden für weitere 4 h bei 100 °C gerührt, dabei fiel ein blass-gelber Niederschlag aus.

Die Reinigung erfolgte analog wie für VM1 angegeben. Die Charakterisierung des Materials erfolgte ebenfalls über XRD, das Spektrum entsprach dem in Abbildung 1 gezeigten.

VM3 - Alternative Herstellung von NH$_2$-MIL-68(In) ohne Basenzusatz

Zu einer Suspension aus 4 mmol (1.35 g) In-Acetat Hydrat (In(OAc)$_3$•x H$_2$O) in 15 mL DMF wurde unter Rühren bei 100 °C eine Lösung aus 3.3 mmol (601.4 mg) 2-Aminoterephthalsäure in 5 mL DMF gegeben. Die vereinigten Lösungen wurden für weitere 4 h bei 100 °C gerührt, dabei fiel ein blass-gelber Niederschlag aus.

Die Reinigung erfolgte analog wie für VM1 angegeben. Die Charakterisierung des Materials erfolgte ebenfalls über XRD, das Spektrum entsprach dem in Abbildung 1 gezeigten.

Tabelle 1 fasst die Kristallitgrößen der unterschiedlich hergestellten NH$_2$-MIL-68(In) zusammen. Die zur Bestimmung der Kristallitgrößen herangezogene Scherrergleichung liefert nur eine semiquantitative Aussage über die Kristallitgröße, im Rahmen der erwartbaren Genauigkeit sind die erhaltenen Kristallitgrößen miteinander vergleichbar.

Tabelle 1:

|     | Kristallitgröße [nm] |
| --- | --- |
| VM1 | 53,4 |
| VM2 | 44,7 |
| VM3 | 57,4 |

Die XRD Charakterisierung der unterschiedlich präparierten NH$_2$-MIL-68(In) kristallinen Indium-Vorläufermaterialien, insbesondere der qualitative Vergleich mit der Datenbank-Referenz, zeigte, dass bei allen Herstellverfahren das gleiche Produkt erhalten wurde. In den folgenden Beispielen wurde jeweils ein Material gemäß Beispiel 2 eingesetzt, auch Materialien gemäß Beispiel 1 oder 3 liefern jedoch die gleichen Ergebnisse.

EB1 - Katalysatormaterial aus NH$_2$-MIL-68(In) mit Palladiumacetat

Unter Rühren wurden 2 g NH$_2$-MIL-68(In) und 20 mg Palladiumacetat (Pd(OAc)$_2$) in 400 mL Aceton suspendiert und für 24 h bei Raumtemperatur gerührt. Anschließend wurde die Suspension zentrifugiert (10 min, 4000 rpm) und die flüssige Phase abdekantiert. Der abzentrifugierte Niederschlag wurde anschließend bei 80 °C getrocknet. Zur Kalzinierung wurde das getrocknete mit Palladium imprägnierte NH$_2$-MIL-68(In) in einem Ofen bei 400 °C für 2 h behandelt.

EB2 - Katalysatormaterial aus NH$_2$-MIL-68(In) mit Palladiumacetat

Unter Rühren wurden 2 g NH$_2$-MIL-68(In) und mit 40 mg Palladiumacetat (Pd(OAc)$_2$) in 400 mL Aceton suspendiert. Die übrige Präparation erfolgte analog wie für EB1 beschrieben.

EB3 - Katalysatormaterial aus NH$_2$-MIL-68(In) mit Palladiumacetat

Unter Rühren wurden 2 g NH$_2$-MIL-68(In) und mit 100 mg Palladiumacetat (Pd(OAc)$_2$) in 400 mL Aceton suspendiert. Die übrige Präparation erfolgte analog wie für EB1 beschrieben.

EB4 - Katalysatormaterial aus NH$_2$-MIL-68(In) mit Palladiumnitrat

Die Herstellung erfolgte analog dem für EB1 angegebenen Verfahren. Als Palladiumsalz wurden 40 mg (Pd(NO$_3$)$_2$ •2 H$_2$O) eingesetzt, als Lösungsmittel 10 mL THF.

EB5 - Katalysatormaterial aus NH$_2$-MIL-68(In) mit Palladiumnitrat

Die Herstellung erfolgte analog dem für EB1 angegebenen Verfahren. Als Palladiumsalz wurden 100 mg (Pd(NO$_3$)$_2$ •2 H$_2$O) eingesetzt, als Lösungsmittel 10 mL THF.

EB6 - Katalysatormaterial aus NH$_2$-MIL-68(In) mit Platinchlorid

Unter Rühren wurden 500 mg NH$_2$-MIL-68(In) und 10 mg Platinchlorid (PtCl$_4$) in 10 mL Aceton suspendiert und für 24 h bei Raumtemperatur gerührt. Anschließend wurde die Suspension zentrifugiert (30 min, 4000 rpm) und die flüssige Phase abdekantiert. Der abzentrifugierte Niederschlag wurde anschließend bei 80 °C getrocknet. Die Kalzinierung erfolgte analog dem für EB1 angegebenen Verfahren.

VB1 - Katalysatormaterial aus NH$_2$-MIL-68(In)

500 mg NH$_2$-MIL-68(In) wurden ohne vorangegangene Imprägnierung analog der in EB1 angegebenen Methode kalziniert.

VB2 - Pd-dotiertes In$_2$O$_3$ durch Kopräzipitation

Zu einer Lösung aus 3.55 g Indiumnitrat (In(NO$_3$)$_3$•2 H$_2$O) und 26.9 mg Palladiumnitrat (Pd(NO$_3$)$_2$ •2 H$_2$O) in 50 mL destilliertem Wasser wurde unter Rühren eine 10-molare Na$_2$CO$_3$-Lösung in destilliertem Wasser gegeben, bis ein pH-Wert von 9,2 erreicht war. Nach Rühren für 1 h bei RT wurde die Reaktionslösung mit destilliertem Wasser verdünnt und der entstandene Niederschlag abfiltriert. Der Filterkuchen wurde 3-mal mit je 100 mL Wasser gewaschen und anschließend im Vakuumtrockenschrank bei 40 °C über Nacht getrocknet. Die Kalzinierung erfolgte analog dem für EB1 beschriebenen Verfahren.

Tabelle 2 fasst die Eigenschaften der erhaltenen Materialien aus EB1 bis EB6 sowie den Vergleichsbeispielen VB1 und VB2 zusammen:

Tabelle 2:

|  | Beladung [Gew.-%] | BET [m$^2$/g] | Porenvolumen [cm$^3$/g] | Porengröße [nm] | Kristallitgröße [nm] |
|---|---|---|---|---|---|
| EB1 | 1 | 80,4 | 0,24 | 10,2 | 8,6 |
| EB2 | 2 | 83,9 | 0,23 | 9,5 | 8,6 |
| EB3 | 5 | 87,1 | 0,22 | 8,7 | 6,2 |

(fortgesetzt)

|  | Beladung [Gew.-%] | BET [$m^2$/g] | Porenvolumen [$cm^3$/g] | Porengröße [nm] | Kristallitgröße [nm] |
|---|---|---|---|---|---|
| EB4 | 2 | 88,5 | 0,26 | 10,4 | 13,6 |
| EB5 | 5 | 81,5 | 0,18 | 8,0 | 7,9 |
| EB6 | 2 | 67,7 | 0,25 | 13,6 | 8,1 |
| VB1 | 0 | 70,2 | 0,25 | 9,9 | 9,2 |
| VB2 | 1 | 122,1 | 0,34 | 8,7 | - |

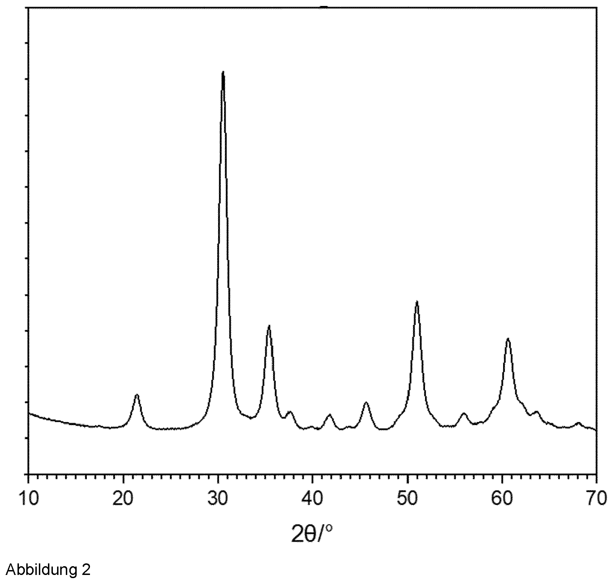

In Abbildung 2 ist das XRD-Spektrum eines gemäß EB1 hergestellten Materials gezeigt. Das Spektrum ist repräsentativ für alle hergestellten Materialien und verdeutlicht durch den für Indiumoxid-typischen Reflex bei 30,5 θ die Kristallinität des hergestellten Materials. Die mittlere Kristallitgröße wurde anhand von diesem Reflex wie oben beschrieben bestimmt.

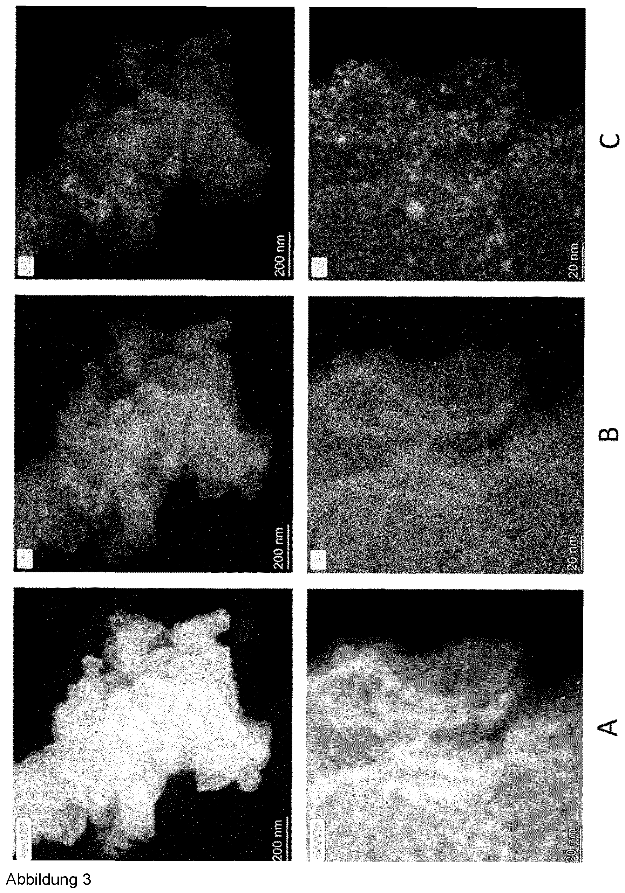

In Abbildung 3 sind TEM-Aufnahmen in niedriger Vergrößerung (obere Reihe) und höherer Vergrößerung (untere Reihe) eines Katalysatormaterials entsprechend EB1 gezeigt. Abbildung 3 A zeigt ein Gesamtbild des Materials in 2 verschiedenen Vergrößerungen, Abb. 3 B und Abb. 3 C die entsprechende Aufnahme im EDX-Modus für Indium bzw. Palladium. Die Aufnahmen zeigen eine homogene Verteilung der Palladium-Spezies auf dem Indium-Trägermaterial.

Die erhaltenen Produkte zeigten hinsichtlich ihrer Eigenschaften keine Abhängigkeit vom Herstellungsverfahren des eingesetzten Vorläufermaterials (VM1, VM2 oder VM3) oder des eingesetzten Palladiumsalzes.

Katalytische Aktivität des Katalysatormaterials

Zur Charakterisierung der Katalysatoraktivität wurde ein eigens angefertigtes Reaktorsystem verwendet, bestehend aus einem Rohrreaktor (Innendurchmesser 4 mm), umhüllt von einem Heizmantel, einem Durchflussregler, einer Druckanzeige, einem Gegendruckregler, einem Temperatursensor und einem Temperaturregler.

Der Rohrreaktor wurde geschichtet mit 750 mg $TiO_2$ als inertes Füllmaterial, 100 mg des Katalysatormaterials vermengt mit weiteren 100 mg $TiO_2$ und mit weiteren 1 g $TiO_2$ befüllt. Anschließend wurde die Reaktorfüllung durch Schütteln homogen verteilt.

Nach Verschließen des Reaktors wurde zunächst für 2 h bei 280 °C mit Helium (50 bar, 80 $cm^3$, Linde) gespült. Anschließend wurde auf eine Gasmischung aus $H_2$ und $CO_2$ (Verhältnis 4:1, 50 bar, 80 $cm^3$, Linde) umgestellt, die Temperatur des Reaktors betrug weiterhin 280 °C.

Zur Verfolgung der Methanol-Bildung wurde stündlich eine Probe des Reaktionsproduktes genommen und mittels HS-GC-FID charakterisiert.

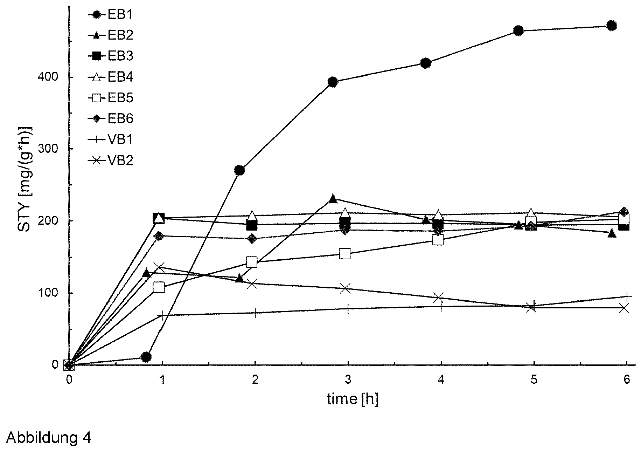

In Abbildung 4 ist der zeitliche Verlauf der Aktivität, ausgedrückt über die spezifische Produktleistung (STY), der verschiedenen Katalysatormaterialien gezeigt. Tabelle 3 fasst außerdem die ermittelten maximalen Aktivitäten der Katalysatoren zusammen:

Tabelle 3:

|  | Spezifische Produktleistung [mg/g*h] |
|---|---|
| EB1 | 480 |
| EB2 | 220 |
| EB3 | 200 |
| EB4 | 230 |
| EB5 | 205 |
| EB6 | 210 |
| VB1 | 95 |
| VB2 | 135 |

Sowohl die Pd-enthaltenden (EB1-5) also auch Pt-enthaltende (EB6) Katalysatoren waren für die Herstellung von Methanol geeignet. Alle erfindungsgemäß präparierten Katalysatoren zeigten im Vergleich zu reinem Indium-Oxid (VB1) und einem mit der herkömmlichen Methode der Kopräzipitation hergestellten Pd-dotierten Katalysator (VB2) eine erhöhte maximale Aktivität.

Im Fall der Pd-beladenen Materialien war die Aktivität unabhängig von der verwendeten Pd-Vorläufer-Spezies. Überraschenderweise zeigte die niedrigste Beladung mit nur 1 Gew.-% Pd (EB1) die höchste Aktivität. Auch über einen Zeitraum von mehr als 5 h war kein Aktivitätsverlust zu beobachten.

**Patentansprüche**

1. Verfahren zur Herstellung eines mit mindestens einem Edelmetall ausgestatteten Indiumoxid-basierten Katalysatormaterials, umfassend folgende Verfahrensschritte:

   (a) Bereitstellen eines Indiumoxid-Vorläufermaterials,
   wobei das Indiumoxid-Vorläufermaterial mindestens ein anorganisch-organisches Hybridmaterial enthält und das anorganisch-organische Hybridmaterial mindestens Indium-Ionen und mindestens eine koordinativ an die Indium-Ionen gebundene, wenigstens zweizähnige organische Verbindung umfasst,
   (b) Imprägnieren des Indiumoxid-Vorläufermaterials mit einer Zusammensetzung, wobei die Zusammensetzung

   (i) mindestens ein Lösungsmittel und
   (ii) mindestens eine Edelmetallverbindung umfasst,

   (c) thermische Behandlung des imprägnierten Indiumoxid-Vorläufermaterials.

2. Verfahren nach Anspruch 1, wobei das mit mindestens einem Edelmetall ausgestattete Indiumoxid-basierte Katalysatormaterial $In_2O_3$ umfasst.

3. Verfahren nach Anspruch 1 oder 2, wobei das mit mindestens einem Edelmetall ausgestattete Indiumoxid-basierte Katalysatormaterial über eine BET-Oberfläche im Bereich von 1 - 400 $m^2$/g verfügt.

4. Verfahren nach einem der vorangegangenen Ansprüche, wobei das mit mindestens einem Edelmetall ausgestattete Indiumoxid-basierte Katalysatormaterial das mindestens eine Edelmetall in einem Bereich von 0,01 - 50 Gew.-% enthält.

5. Verfahren nach einem der vorangegangenen Ansprüche, wobei das mindestens eine Edelmetall ausgewählt ist aus der Gruppe bestehend aus Edelmetallen der 8. Gruppe, der 9. Gruppe, der 10. Gruppe und der 11. Gruppe des Periodensystems.

6. Verfahren nach einem der vorangegangenen Ansprüche, wobei es sich bei dem mindestens einen Edelmetall um Palladium, Palladium und Ruthenium, Palladium und Rhodium, Palladium und Silber, Palladium und Osmium, Palladium und Platin, Palladium und Gold, Palladium und Iridium, Platin, Platin und Ruthenium, Platin und Rhodium, Platin und Osmium, Platin und Gold, Platin und Iridium, Ruthenium, Ruthenium und Rhodium, Ruthenium und Osmium, Ruthenium und Gold oder Ruthenium und Iridium handelt.

7. Verfahren nach einem der vorangegangenen Ansprüche, wobei das mit mindestens einem Edelmetall ausgestattete Indiumoxid-basierte Katalysatormaterial über Poren im Größenbereich von Mesoporen verfügt.

8. Verfahren nach einem der vorangegangenen Ansprüche, wobei das mit mindestens einem Edelmetall ausgestattete Indiumoxid-basierte Katalysatormaterial ein Porenvolumen im Bereich von 0,05 - 5 $cm^3$/g aufweist.

9. Verfahren nach einem der vorangegangenen Ansprüche, wobei die mindestens eine, wenigstens zweizähnige organische Verbindung eine Di-Carbonsäure, eine Tri-Carbonsäure, eine Tetra-Carbonsäure oder ein Pyridin-Derivat ist.

10. Verfahren nach einem der vorangegangenen Ansprüche, wobei das anorganisch-organische Hybridmaterial 2-Amino-Terephtalsäure oder 2,2'-Bipyridyl-5,5'-Dicarbonsäure umfasst.

11. Verfahren nach einem der vorangegangenen Ansprüche, wobei die Zusammensetzung in Schritt (b) 0,01 bis 80 Gew.-% des mindestens einen Edelmetalls umfasst.

12. Verfahren nach einem der vorangegangenen Ansprüche, wobei Schritt (c) bei einer Temperatur im Bereich von 200 - 800 °C erfolgt.

13. Ein mit mindestens einem Edelmetall ausgestattetes Indiumoxid-basiertes Katalysatormaterial, erhältlich durch ein Verfahren gemäß einem der vorangegangenen Ansprüche.

14. Verwendung des mit mindestens einem Edelmetall ausgestatteten Indiumoxid-basierten Katalysatormaterials gemäß Anspruch 13 oder hergestellt gemäß einem der Ansprüche 1-12 als Katalysator.

15. Verfahren zur Herstellung von Methanol unter Verwendung des mit mindestens einem Edelmetall ausgestatteten Indiumoxid-basierten Katalysatormaterials gemäß Anspruch 13 oder hergestellt gemäß einem der Ansprüche 1 - 12, umfassend die Schritte:

(a) Bereitstellung des mit mindestens einem Edelmetall ausgestatteten Indiumoxid-basierten Katalysatormaterials,
(b) Bereitstellung eines Gasgemischs, umfassend mindestens ein Kohlenstoffoxid und Wasserstoff,
(c) Kontaktieren des mit mindestens einem Edelmetall ausgestatteten Indiumoxid-basierten Katalysatormaterials mit dem Gasgemisch.

Abbildung 1

Abbildung 2

Abbildung 3

Abbildung 4

Europäisches
Patentamt

European
Patent Office

Office européen
des brevets

## EUROPÄISCHER RECHERCHENBERICHT

Nummer der Anmeldung

**EP 22 17 6020**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | STOLAROV IGOR P. ET AL: "Heterometallic Palladium(II)-Indium(III) and -Gallium(III) Acetate-Bridged Complexes: Synthesis, Structure, and Catalytic Performance in Homogeneous Alkyne and Alkene Hydrogenation", INORGANIC CHEMISTRY, Bd. 57, Nr. 18, 17. September 2018 (2018-09-17), Seiten 11482-11491, XP055979922, Easton , US ISSN: 0020-1669, DOI: 10.1021/acs.inorgchem.8b01313 * 2. RESULTS AND DISCUSSION 3. EXPERIMENTAL SECTION 4. CONCLUSIONS * ----- | 1-14 | INV. B01J23/62 B01J35/00 B01J35/10 B01J37/00 B01J37/02 B01J37/03 B01J37/04 B01J37/08 |
| X | FREI MATTHIAS S. ET AL: "Atomic-scale engineering of indium oxide promotion by palladium for methanol production via CO2 hydrogenation", NATURE COMMUNICATIONS, Bd. 10, Nr. 1, 1. Dezember 2019 (2019-12-01), XP055979915, DOI: 10.1038/s41467-019-11349-9 Gefunden im Internet: URL:https://www.nature.com/articles/s41467-019-11349-9.pdf> * Methods Catalyst preparation. catalytic testing. discussion; Abbildungen; Tabellen; Verbindungen * ----- -/-- | 13-15 | RECHERCHIERTE SACHGEBIETE (IPC) B01J |

Der vorliegende Recherchenbericht wurde für alle Patentansprüche erstellt

| Recherchenort | Abschlußdatum der Recherche | Prüfer |
|---|---|---|
| München | 10. November 2022 | de Cauwer, Robby |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............
& : Mitglied der gleichen Patentfamilie, übereinstimmendes Dokument

Europäisches Patentamt
European Patent Office
Office européen des brevets

## EUROPÄISCHER RECHERCHENBERICHT

**Nummer der Anmeldung**

**EP 22 17 6020**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/322957 A1 (STEWART JOSEPH [BE] ET AL) 21. Oktober 2021 (2021-10-21) * Absätze [0031], [0082], [0083], [0086], [0118]; Ansprüche; Abbildungen; Beispiele; Verbindungen * ----- | 13-15 | |
| X | RUI NING ET AL: "CO2hydrogenation to methanol over Pd/In2O3: effects of Pd and oxygen vacancy", APPLIED CATALYSIS B. ENVIRONMENTAL, ELSEVIER, AMSTERDAM, NL, Bd. 218, 23. Juni 2017 (2017-06-23), Seiten 488-497, XP085143107, ISSN: 0926-3373, DOI: 10.1016/J.APCATB.2017.06.069 * 2. experimental 3. results; Abbildungen; Tabellen; Verbindungen * ----- | 13-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 10. November 2022 | de Cauwer, Robby |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 6020

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-11-2022

| Im Recherchenbericht angeführtes Patentdokument | Datum der Veröffentlichung | Mitglied(er) der Patentfamilie | Datum der Veröffentlichung |
|---|---|---|---|
| US 2021322957 A1 | 21-10-2021 | EP 3846936 A1 | 14-07-2021 |
| | | EP 3846937 A1 | 14-07-2021 |
| | | US 2021322957 A1 | 21-10-2021 |
| | | US 2021354114 A1 | 18-11-2021 |
| | | WO 2020049081 A1 | 12-03-2020 |
| | | WO 2020049082 A1 | 12-03-2020 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3400099 A1
- EP 3400098 A1
- EP 3846937 A1
- EP 2491047 A1

**In der Beschreibung aufgeführte Nicht-Patentliteratur**

- **RUI et al.** *Appl. Catal. B,* 2017, vol. 218, 488-497
- **HAN et al.** Environment friendly and remarkably efficient photocatalytic hydrogen evolution based on metal organic framework derived hexagonal/cubic In2O3 phase-junction. *Applied catalysis B: Environmental,* 2021, vol. 282, 119602